# EUROPEAN PATENT APPLICATION

(11) **EP 4 597 898 A1**
(43) Date of publication of application: **06.08.2025**
(21) Application number: 23870579.2
(22) Date of filing: 21.09.2023
(51) Int. Cl.: H04L 5/00

(54) **METHOD FOR DETERMINING CONTROL INFORMATION, AND TERMINAL DEVICE, NETWORK DEVICE AND STORAGE MEDIUM**

(30) Priority: 30.09.2022 CN 202211216498
(71) Applicant: Datang Mobile Communications Equipment Co., Ltd., Beijing 100085 (CN)
(72) Inventor: HUANG, Qiuping, Beijing 100085 (CN)
(74) Representative: Studio Torta S.p.A.
(86) International application number: PCT/CN2023/120385
(87) International publication number: WO 2024/067347

(57) **Abstract**

Provided in the present disclosure are a method for determining control information, and a terminal device, a network device and a storage medium. The method comprises: determining a first number of layers corresponding to a first channel, the number of codewords corresponding to scheduling information of the first channel, or a first parameter, wherein the first parameter is used for determining the number of codewords corresponding to the scheduling information of the first channel; and on the basis of the first number of layers, the number of codewords, or the first parameter, determining the number of pieces of first control information comprised in the scheduling information of the first channel and/or the number of information fields, which are used for indicating the first control information, in the scheduling information of the first channel.

## Description

### CROSS-REFERENCES TO RELATED APPLICATIONS

The present application claims priority to Chinese patent application No. 202211216498.6 filed on September 30, 2022, entitled "Method for Determining Control Information, and Terminal Device, Network Device and Storage Medium", which is hereby incorporated by reference in its entirety.

### FIELD

The present application relates to the field of radio communication, and in particular to methods for determining control information, a user equipment (UE), a network device, and a storage medium.

### BACKGROUND

In some radio communication systems, such as a new radio (NR) system and a long term evolution (LTE) system, single codeword transmission and two codeword transmission are supported. The number of transport blocks (TBs) contained in control information is generally controlled by a base station through a dedicated radio resource control (RRC) signaling. The downlink control information (DCI) contains one or two TBs, and one TB may be understood as one codeword (CW).

In a traditional NR system, only a physical downlink share channel (PDSCH) supports two codeword transmission. If a higher layer parameter *maxNrofCodeWordsScheduledByDCI* indicates that one piece of DCI schedules at most two CWs, the DCI scheduling PDSCH contains control information, such as modulation and coding scheme (MCS), redundancy version (RV), or new data indicator (NDI), corresponding to two TBs; otherwise, the DCI scheduling PDSCH only contains control information corresponding to one TB.

In the related art, there is always control information corresponding to only one TB (CW) in the DCI for scheduling physical uplink share channel (PUSCH). There is no mechanism to determine whether the DCI for scheduling PUSCH contains control information corresponding to one or two TBs. In Rel-18, DCI is allowed to indicate control information corresponding to two TBs (CWs), that is, PUSCH is allowed to perform two codeword transmission, which helps improve uplink transmission performance. If the DCI always contains control information corresponding to two TBs (CWs), DCI overhead always corresponds to an overhead corresponding to the two TBs. However, in some scenarios, the base station does not schedule PUSCH for two codeword transmission (that is, the base station only schedules PUSCH for single codeword transmission), but the DCI overhead still corresponds to the overhead corresponding to the two TBs, which causes a waste of DCI resources.

### BRIEF SUMMARY

Embodiments of the present application provide methods for determining control information, a user equipment (UE), a network device and a storage medium, to solve a problem of excessive overhead of scheduling information in radio communication system, achieve a correspondence between the number of pieces of control information contained in the scheduling information and the maximum number of layers or the number of codewords, reduce the overhead of single codeword transmission, and avoid waste of information resources.

An embodiment of the present application provides a method for determining control information, performed by a user equipment (UE), including:
determining a first number of layers corresponding to a first channel, or a number of codewords corresponding to scheduling information for a first channel, or a first parameter, where the first parameter is used to determine a number of codewords corresponding to scheduling information for a first channel; and
determining, based on the first number of layers or the number of codewords or the first parameter, a number of pieces of first control information contained in the scheduling information for the first channel and/or a number of information fields, in the scheduling information for the first channel, for indicating first control information.

In an embodiment, the first number of layers includes one of the following:
a maximum number of layers determined based on restriction information for number of layers;
a number of layers configured by a network device; or
a maximum number of layers supported by the UE.

In an embodiment, the number of layers configured by the network device includes one of the following:
a maximum number of layers corresponding to a type of the scheduling information; or
a maximum number of layers corresponding to a serving cell where the first channel is located.

In an embodiment, the scheduling information is downlink control information (DCI), and numbers of layers corresponding to different types of DCI are configured separately by the network device.

In an embodiment, the information fields, in the scheduling information for the first channel, for indicating the first control information and a number of codewords corresponding to the scheduling information are in one-to-one correspondence.

In an embodiment, the method further includes:
determining the scheduling information based on the number of pieces of the first control information and/or the number of information fields for indicating the first control information.

In an embodiment, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, the method further includes:
transmitting information on the first channel based on the first control information.

In an embodiment, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, determining, based on the first number of layers, the number of pieces of the first control information contained in the scheduling information for the first channel and/or the number of information fields, in the scheduling information for the first channel, for indicating the first control information includes:
determining, based on a value range of the first number of layers, the number of pieces of the first control information contained in the scheduling information for the first channel and/or the number of information fields, in the scheduling information for the first channel, for indicating the first control information.

In an embodiment, determining, based on the value range of the first number of layers, the number of pieces of the first control information contained in the scheduling information for the first channel and/or the number of information fields, in the scheduling information for the first channel, for indicating the first control information includes:
in case that a maximum value of the first number of layers is greater than 4, determining that the number of pieces of the first control information contained in the scheduling information is 2; and
in case that a maximum value of the first number of layers is smaller than or equal to 4, determining that a number of pieces of control information corresponding to a transport block contained in the scheduling information is 1.

In an embodiment, determining, based on the number of codewords, the number of pieces of the first control information contained in the scheduling information for the first channel and/or the number of information fields, in the scheduling information for the first channel, for indicating the first control information includes:
determining, based on a value range of the number of codewords, the number of pieces of the first control information contained in the scheduling information for the first channel and/or the number of information fields, in the scheduling information for the first channel, for indicating the first control information.

In an embodiment, determining, based on the value range of the number of codewords, the number of pieces of the first control information contained in the scheduling information for the first channel and/or the number of information fields, in the scheduling information for the first channel, for indicating the first control information includes:
in case that the number of codewords is 2, determining that the number of pieces of the first control information contained in the scheduling information is 2; and
in case that the number of codeword is 1, determining that the number of pieces of the first control information contained in the scheduling information is 1.

An embodiment of the present application further provides a method for determining control information, performed by a network device, including:
determining a first number of layers corresponding to a first channel, or a number of codewords corresponding to scheduling information for a first channel, or a first parameter, where the first parameter is used to determine a number of codewords corresponding to scheduling information for a first channel;
determining a number of pieces of first control information contained in the scheduling information for the first channel and/or a number of information fields, in the scheduling information for the first channel, for indicating first control information, where the number of pieces of the first control information and/or the number of the information fields has a correspondence relationship with the first number of layers or the number of codewords; and
transmitting the scheduling information to a user equipment (UE).

In an embodiment, the first number of layers includes one of the following:
a maximum number of layers determined based on restriction information for number of layers;
a number of layers configured by the network device; or
a maximum number of layers supported by the UE.

In an embodiment, the number of layers configured by the network device includes one of the following:
a maximum number of layers corresponding to a type of the scheduling information; or
a maximum number of layers corresponding to a serving cell where the first channel is located.

In an embodiment, the scheduling information is downlink control information (DCI), and numbers of layers corresponding to different types of DCI are configured separately by the network device.

In an embodiment, the information fields, in the scheduling information for the first channel, for indicating the first control information and a number of codewords corresponding to the scheduling information are in one-to-one correspondence.

In an embodiment, the method further includes:
determining the scheduling information based on the number of pieces of the first control information and/or the number of information fields for indicating the first control information.

In an embodiment, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, the method further includes:
transmitting information on the first channel based on the first control information.

In an embodiment, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, the number of pieces of the first control information and/or the number of the information fields has the correspondence relationship with the first number of layers includes:
a value range of the first number of layers has a correspondence relationship with the number of pieces of the first control information contained in the scheduling information for the first channel and/or the number of the information fields, in the scheduling information for the first channel, for indicating the first control information.

In an embodiment, the value range of the first number of layers has the correspondence relationship with the number of pieces of the first control information contained in the scheduling information for the first channel and/or the number of the information fields, in the scheduling information for the first channel, for indicating the first control information includes:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

In an embodiment, the number of pieces of the first control information and/or the number of the information fields has the correspondence relationship with the number of codewords includes:
a value range of the number of codewords has a correspondence relationship with the number of pieces of the first control information contained in the scheduling information for the first channel and/or the number of information fields, in the scheduling information for the first channel, for indicating the first control information.

In an embodiment, the value range of the number of codewords has the correspondence relationship with the number of pieces of the first control information contained in the scheduling information for the first channel and/or the number of information fields, in the scheduling information for the first channel, for indicating the first control information includes:
in case that the number of codewords is 2, the number of pieces of the first control information contained in the scheduling information is 2; and
in case that the number of codeword is 1, the number of pieces of the first control information contained in the scheduling information is 1.

An embodiment of the present application further provides a user equipment (UE), including: a memory, a transceiver, and a processor;
where the memory is used for storing a computer program; the transceiver is used for receiving and transmitting data under control of the processor; and the processor is used for reading the computer program in the memory and performing the following operations:
determining a first number of layers corresponding to a first channel, or a number of codewords corresponding to scheduling information for a first channel, or a first parameter, where the first parameter is used to determine a number of codewords corresponding to scheduling information for a first channel; and
determining, based on the first number of layers or the number of codewords or the first parameter, a number of pieces of first control information contained in the scheduling information for the first channel and/or a number of information fields, in the scheduling information for the first channel, for indicating first control information.

In an embodiment, the first number of layers includes one of the following:
a maximum number of layers determined based on restriction information for number of layers;
a number of layers configured by a network device; or
a maximum number of layers supported by the UE.

In an embodiment, the number of layers configured by the network device includes one of the following:
a maximum number of layers corresponding to a type of the scheduling information; or
a maximum number of layers corresponding to a serving cell where the first channel is located.

In an embodiment, the scheduling information is downlink control information (DCI), and numbers of layers corresponding to different types of DCI are configured separately by the network device.

In an embodiment, the information fields, in the scheduling information for the first channel, for indicating the first control information and a number of codewords corresponding to the scheduling information are in one-to-one correspondence.

In an embodiment, the operations further include:
determining the scheduling information based on the number of pieces of the first control information and/or the number of information fields for indicating the first control information.

In an embodiment, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, the operations further include:
transmitting information on the first channel based on the first control information.

In an embodiment, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, determining, based on the first number of layers, the number of pieces of the first control information contained in the scheduling information for the first channel and/or the number of information fields, in the scheduling information for the first channel, for indicating the first control information includes:
determining, based on a value range of the first number of layers, the number of pieces of the first control information contained in the scheduling information for the first channel and/or the number of information fields, in the scheduling information for the first channel, for indicating the first control information.

In an embodiment, determining, based on the value range of the first number of layers, the number of pieces of the first control information contained in the scheduling information for the first channel and/or the number of information fields, in the scheduling information for the first channel, for indicating the first control information includes:
in case that a maximum value of the first number of layers is greater than 4, determining that the number of pieces of the first control information contained in the scheduling information is 2; and
in case that a maximum value of the first number of layers is smaller than or equal to 4, determining that a number of pieces of control information corresponding to a transport block contained in the scheduling information is 1.

In an embodiment, determining, based on the number of codewords, the number of pieces of the first control information contained in the scheduling information for the first channel and/or the number of information fields, in the scheduling information for the first channel, for indicating the first control information includes:
determining, based on a value range of the number of codewords, the number of pieces of the first control information contained in the scheduling information for the first channel and/or the number of information fields, in the scheduling information for the first channel, for indicating the first control information.

In an embodiment, determining, based on the value range of the number of codewords, the number of pieces of the first control information contained in the scheduling information for the first channel and/or the number of information fields, in the scheduling information for the first channel, for indicating the first control information includes:
in case that the number of codewords is 2, determining that the number of pieces of the first control information contained in the scheduling information is 2; and
in case that the number of codeword is 1, determining that the number of pieces of the first control information contained in the scheduling information is 1.

An embodiment of the present application further provides a network device, including: a memory, a transceiver, and a processor;
where the memory is used for storing a computer program; the transceiver is used for receiving and transmitting data under control of the processor; and the processor is used for reading the computer program in the memory and performing the following operations:
determining a first number of layers corresponding to a first channel, or a number of codewords corresponding to scheduling information for a first channel, or a first parameter, where the first parameter is used to determine a number of codewords corresponding to scheduling information for a first channel;
determining a number of pieces of first control information contained in the scheduling information for the first channel and/or a number of information fields, in the scheduling information for the first channel, for indicating first control information, where the number of pieces of the first control information and/or the number of the information fields has a correspondence relationship with the first number of layers or the number of codewords; and
transmitting the scheduling information to a user equipment (UE).

In an embodiment, the first number of layers includes one of the following:
a maximum number of layers determined based on restriction information for number of layers;
a number of layers configured by the network device; or
a maximum number of layers supported by the UE.

In an embodiment, the number of layers configured by the network device includes one of the following:
a maximum number of layers corresponding to a type of the scheduling information; or
a maximum number of layers corresponding to a serving cell where the first channel is located.

In an embodiment, the scheduling information is downlink control information (DCI), and numbers of layers corresponding to different types of DCI are configured separately by the network device.

In an embodiment, the information fields, in the scheduling information for the first channel, for indicating the first control information and a number of codewords corresponding to the scheduling information are in one-to-one correspondence.

In an embodiment, the operations further include:
determining the scheduling information based on the number of pieces of the first control information and/or the number of information fields for indicating the first control information.

In an embodiment, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, the operations further include:
transmitting information on the first channel based on the first control information.

In an embodiment, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, the number of pieces of the first control information and/or the number of the information fields has the correspondence relationship with the first number of layers includes:
a value range of the first number of layers has a correspondence relationship with the number of pieces of the first control information contained in the scheduling information for the first channel and/or the number of the information fields, in the scheduling information for the first channel, for indicating the first control information.

In an embodiment, the value range of the first number of layers has the correspondence relationship with the number of pieces of the first control information contained in the scheduling information for the first channel and/or the number of the information fields, in the scheduling information for the first channel, for indicating the first control information includes:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

In an embodiment, the number of pieces of the first control information and/or the number of the information fields has the correspondence relationship with the number of codewords includes:
a value range of the number of codewords has a correspondence relationship with the number of pieces of the first control information contained in the scheduling information for the first channel and/or the number of information fields, in the scheduling information for the first channel, for indicating the first control information.

In an embodiment, the value range of the number of codewords has the correspondence relationship with the number of pieces of the first control information contained in the scheduling information for the first channel and/or the number of information fields, in the scheduling information for the first channel, for indicating the first control information includes:
in case that the number of codewords is 2, the number of pieces of the first control information contained in the scheduling information is 2; and
in case that the number of codeword is 1, the number of pieces of the first control information contained in the scheduling information is 1.

An embodiment of the present application further provides an apparatus for determining control information, including:
a determining unit for a number of layers or a number of codewords, used for determining a first number of layers corresponding to a first channel, or a number of codewords corresponding to scheduling information for a first channel, or a first parameter, where the first parameter is used to determine a number of codewords corresponding to scheduling information for a first channel; and
a determining unit for a number of pieces of control information or a number of information fields, used for determining, based on the first number of layers or the number of codewords or the first parameter, a number of pieces of first control information contained in the scheduling information for the first channel and/or a number of information fields, in the scheduling information for the first channel, for indicating first control information.

In an embodiment, the first number of layers includes one of the following:
a maximum number of layers determined based on restriction information for number of layers;
a number of layers configured by a network device; or
a maximum number of layers supported by the UE.

In an embodiment, the number of layers configured by the network device includes one of the following:
a maximum number of layers corresponding to a type of the scheduling information; or
a maximum number of layers corresponding to a serving cell where the first channel is located.

In an embodiment, the scheduling information is downlink control information (DCI), and numbers of layers corresponding to different types of DCI are configured separately by the network device.

In an embodiment, the information fields, in the scheduling information for the first channel, for indicating the first control information and a number of codewords corresponding to the scheduling information are in one-to-one correspondence.

In an embodiment, the apparatus further includes:
determining the scheduling information based on the number of pieces of the first control information and/or the number of information fields for indicating the first control information.

In an embodiment, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, the apparatus further includes:
transmitting information on the first channel based on the first control information.

In an embodiment, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, determining, based on the first number of layers, the number of pieces of the first control information contained in the scheduling information for the first channel and/or the number of information fields, in the scheduling information for the first channel, for indicating the first control information includes:
determining, based on a value range of the first number of layers, the number of pieces of the first control information contained in the scheduling information for the first channel and/or the number of information fields, in the scheduling information for the first channel, for indicating the first control information.

In an embodiment, determining, based on the value range of the first number of layers, the number of pieces of the first control information contained in the scheduling information for the first channel and/or the number of information fields, in the scheduling information for the first channel, for indicating the first control information includes:
in case that a maximum value of the first number of layers is greater than 4, determining that the number of pieces of the first control information contained in the scheduling information is 2; and
in case that a maximum value of the first number of layers is smaller than or equal to 4, determining that a number of pieces of control information corresponding to a transport block contained in the scheduling information is 1.

In an embodiment, determining, based on the number of codewords, the number of pieces of the first control information contained in the scheduling information for the first channel and/or the number of information fields, in the scheduling information for the first channel, for indicating the first control information includes:
determining, based on a value range of the number of codewords, the number of pieces of the first control information contained in the scheduling information for the first channel and/or the number of information fields, in the scheduling information for the first channel, for indicating the first control information.

In an embodiment, determining, based on the value range of the number of codewords, the number of pieces of the first control information contained in the scheduling information for the first channel and/or the number of information fields, in the scheduling information for the first channel, for indicating the first control information includes:
in case that the number of codewords is 2, determining that the number of pieces of the first control information contained in the scheduling information is 2; and
in case that the number of codeword is 1, determining that the number of pieces of the first control information contained in the scheduling information is 1.

An embodiment of the present application further provides an apparatus for determining control information, including:
a determining unit for a number of layers or a number of codewords, used for determining a first number of layers corresponding to a first channel, or a number of codewords corresponding to scheduling information for a first channel, or a first parameter, where the first parameter is used to determine a number of codewords corresponding to scheduling information for a first channel;
a determining unit for a number of pieces of control information or a number of information fields, used for determining a number of pieces of first control information contained in the scheduling information for the first channel and/or a number of information fields, in the scheduling information for the first channel, for indicating first control information, where the number of pieces of the first control information and/or the number of the information fields has a correspondence relationship with the first number of layers or the number of codewords; and
a transmitting unit, used for transmitting the scheduling information to a user equipment (UE).

In an embodiment, the first number of layers includes one of the following:
a maximum number of layers determined based on restriction information for number of layers;
a number of layers configured by a network device; or
a maximum number of layers supported by the UE.

In an embodiment, the number of layers configured by the network device includes one of the following:
a maximum number of layers corresponding to a type of the scheduling information; or
a maximum number of layers corresponding to a serving cell where the first channel is located.

In an embodiment, the scheduling information is downlink control information (DCI), and numbers of layers corresponding to different types of DCI are configured separately by the network device.

In an embodiment, the information fields, in the scheduling information for the first channel, for indicating the first control information and a number of codewords corresponding to the scheduling information are in one-to-one correspondence.

In an embodiment, the apparatus further includes:
determining the scheduling information based on the number of pieces of the first control information and/or the number of information fields for indicating the first control information.

In an embodiment, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, the apparatus further includes:
transmitting information on the first channel based on the first control information.

In an embodiment, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, the number of pieces of the first control information and/or the number of the information fields has the correspondence relationship with the first number of layers includes:
a value range of the first number of layers has a correspondence relationship with the number of pieces of the first control information contained in the scheduling information for the first channel and/or the number of the information fields, in the scheduling information for the first channel, for indicating the first control information.

In an embodiment, the value range of the first number of layers has the correspondence relationship with the number of pieces of the first control information contained in the scheduling information for the first channel and/or the number of the information fields, in the scheduling information for the first channel, for indicating the first control information includes:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

In an embodiment, the number of pieces of the first control information and/or the number of the information fields has the correspondence relationship with the number of codewords includes:
a value range of the number of codewords has a correspondence relationship with the number of pieces of the first control information contained in the scheduling information for the first channel and/or the number of information fields, in the scheduling information for the first channel, for indicating the first control information.

In an embodiment, the value range of the number of codewords has the correspondence relationship with the number of pieces of the first control information contained in the scheduling information for the first channel and/or the number of information fields, in the scheduling information for the first channel, for indicating the first control information includes:
in case that the number of codewords is 2, the number of pieces of the first control information contained in the scheduling information is 2; and
in case that the number of codeword is 1, the number of pieces of the first control information contained in the scheduling information is 1.

An embodiment of the present application further provides a computer-readable storage medium, where the computer-readable storage medium stores a computer program, and the computer program is used to cause a computer to perform any of the methods described above.

In the methods for determining control information, the UE, the network device and the storage medium provided by the embodiments of the present application, by determining the maximum number of layers for channel transmission or determining the number of codewords corresponding to the scheduling information, and determining the number of pieces of the first control information and/or the number of information fields corresponding to the first number of layers or the number of codewords, a correspondence between the overhead of the scheduling information and the maximum number of layers or the number of codewords is achieved, the overhead of single codeword transmission is reduced, and the waste of information resources is avoided.

### BRIEF DESCRIPTION OF THE DRAWINGS

To clearly illustrate the solutions in the embodiments of the present application, the drawings used in the description of the embodiments are briefly described below. The drawings in the following description are only some embodiments of the present application, and other drawings may be obtained according to these drawings without any creative effort for those skilled in the art.
FIG. 1 is a first schematic flowchart of a method for determining control information according to an embodiment of the present application;
FIG. 2 is a second schematic flowchart of a method for determining control information according to an embodiment of the present application;
FIG. 3 is a schematic structural diagram of a user equipment (UE) according to an embodiment of the present application;
FIG. 4 is a schematic structural diagram of a network device according to an embodiment of the present application;
FIG. 5 is a first schematic structural diagram of an apparatus for determining control information according to an embodiment of the present application; and
FIG. 6 is a second schematic structural diagram of an apparatus for determining control information according to an embodiment of the present application.

### DETAILED DESCRIPTION

In the embodiments of the present application, the term "and/or" describes a related relationship of associated objects, and indicates that there may be three kinds of relationships. For example, A and/or B may represent that A exists alone, A and B exist simultaneously, and B exists alone. Character "/" generally indicates that the associated objects have an "or" relationship.

In addition, the terms "first", "second", etc. are only used for descriptive purposes and are used to distinguish similar features, and cannot be understood as indicating or implying relative importance or implicitly indicating the number of the indicated features. Therefore, features defined by "first" and "second" may explicitly or implicitly include at least one of these features. In the embodiments of the present application, the term "multiple" refers to two or more than two, and other quantifiers are similar to it.

"Determining B based on A" in the present application means that the factor A should be considered when determining B. It is not limited to "determining B only based on A", but also includes "determining B based on A and C", "determining B based on A, C and E", "determining C based on A, and further determining B based on C", etc. In addition, it may also include taking A as a condition for determining B, for example, "in case that A meets a first condition, determining B by using a first method". For another example, "in case that A meets a second condition, determining B", etc. For another example, "in case that A meets a third condition, determining B based on a first parameter", etc. In an embodiment, it may be that A is taken as a condition for determining a factor of B, for example, "in case that A meets the first condition, determining C by using the first method, and further determining B based on C", etc.

The solutions according to the embodiments of the present application may be applicable to various systems, especially 5^{th} Generation (5G) system, 5G advanced system, 6^{th} Generation (6G) system, or their evolved systems. For example, the applicable systems may be a global system of mobile communication (GSM) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a long term evolution advanced (LTE-A) system, a universal mobile telecommunication system (UMTS), a worldwide interoperability for microwave access (WiMAX) system, a 5G new radio (NR) system, or other orthogonal frequency division multiplexing (OFDM) system, discrete Fourier transform spread OFDM (DFT-S-OFDM) system, etc. These various systems include a terminal device and a network device, and may further include a core network part, such as an evolved packet system (EPS), a 5G system (5GS), and the like.

The terminal device in the embodiments of the present application may be a device that provides voice and/or data connectivity to a user, a handheld device with a wireless connection function, or other processing devices connected to a wireless modem. In different systems, the names of the terminal device may be different. For example, in the 5G system, the terminal device may be called as a user equipment (UE). A wireless terminal device may communicate with one or more core networks (CNs) via a radio access network (RAN), and the wireless terminal device may be a mobile terminal device, such as a mobile phone (or cellular phone), a computer with mobile terminal device, e.g., a portable mobile device, a pocket-sized mobile device, a handheld mobile device, a computer-built mobile device or a vehicle-mounted mobile device, which exchange language and/or data with the radio access network. For example, a personal communication service (PCS) phone, a radio phone, a session initiated protocol (SIP) phone, a wireless local loop (WLL) station, a personal digital assistant (PDA) and other devices. A wireless terminal device may also be called a system, a subscriber unit, a subscriber station, a mobile station, a mobile, a remote station, an access point, a remote terminal, an access terminal, a user terminal, a user agent, or a user device, which is not limited in the embodiments of the present application.

The network device in the embodiments of the present application may be a base station, and the base station may include multiple cells providing services for the terminal. Depending on the specific scenario, the base station may be called an access point, or a device communicating with a wireless terminal device through one or more sectors on the air interface in the access network, or other names. The network device may be used for exchanging received air frames with Internet Protocol (IP) packets, and acting as a router between the wireless terminal device and the rest of the access network, where the rest of the access network may include an IP communication network. The network device may also coordinate attribute management for the air interface. For example, the network device in the embodiments of the present application may be a base transceiver station (BTS) in a global system for mobile communications (GSM) or a code division multiple access (CDMA), a node B in a wide-band code division multiple access (WCDMA), an evolutional node B (eNB or e-Node B) in a long term evolution (LTE) system, a 5G base station (gNB) in 5G network architecture (next generation system), a home evolved node B (HeNB), a relay node, a femto, or a pico base station (pico), etc., which is not limited in the embodiments of the present application. In some network structures, the network device may include a centralized unit (CU) node and a distributed unit (DU) node, and the centralized unit and the distributed unit may be geographically separated.

A multi-input multi-output (MIMO) transmission may be performed between the network device and the terminal device by using one or more antennas. The MIMO transmission may be single-user MIMO (SU-MIMO) or multi-user MIMO (MU-MIMO). Depending on the form and number of antenna combinations, MIMO transmission may be 2D-MIMO, 3D-MIMO, FD-MIMO or massive-MIMO, and may also be diversity transmission, precoding transmission, beamforming transmission, etc.

The solutions in the embodiments of the present application are clearly and completely described in the following with reference to the accompanying drawings in the embodiments of the present application. These embodiments are only a part of the embodiments of the present application, and not all of the embodiments. All other embodiments obtained by those skilled in the art based on the embodiments of the present application without any creative effort belong to the scope of the present application.

Taking a new radio (NR) system as an example, in a traditional NR system, only a physical downlink share channel (PDSCH) supports two codeword (CW) transmission. If a higher layer parameter *maxNrofCodeWordsScheduledByDCI* indicates that one piece of downlink control information (DCI) schedules at most two CWs, the DCI scheduling PDSCH contains control information, such as modulation and coding scheme (MCS), redundancy version (RV), or new data indicator (NDI), corresponding to two transport blocks (TBs); otherwise, the DCI scheduling PDSCH only contains control information corresponding to one TB. In case that the DCI contains control information corresponding to two TBs, a base station may indicate whether both the TBs are enabled through the values of MCS and RV, that is, a user equipment (UE) determines whether both the TBs are enabled through the values of MCS and RV.

In the NR system, for physical uplink share channel (PUSCH), the base station may indicate, through *maxMIMO-Layers,* the maximum number of multi-input multi-output (MIMO) layers that the DCI for scheduling PUSCH in all bandwidth parts (BWPs) of a serving cell may indicate, where *maxMIMO-Layers* corresponding to DCI format 0_1 and DCI format 0_2 are indicated separately. For codebook-based PUSCH, for each BWP, the base station may indicate, through *maxRank,* the maximum number of layers (maximum value of transmission rank indicator (TRI)) that the DCI for scheduling PUSCH may indicate, where *maxRanks* corresponding to DCI format 0_1 and DCI format 0_2 are indicated separately. For non-codebook PUSCH, in case that the base station indicates *maxMIMO-Layers,* the maximum number of layers that the DCI for scheduling PUSCH may indicate is determined based on *maxMIMO-Layers;* otherwise, it is determined based on the maximum number of PUSCH transmission layers supported by the UE in this serving cell. If the DCI always contains control information corresponding to two TBs (CWs), DCI overhead always corresponds to an overhead corresponding to the two TBs. However, in some scenarios, the base station does not schedule PUSCH for two codeword transmission (that is, the base station only schedules PUSCH for single codeword transmission), but the DCI overhead still corresponds to the overhead corresponding to the two TBs, which causes a waste of DCI resources.

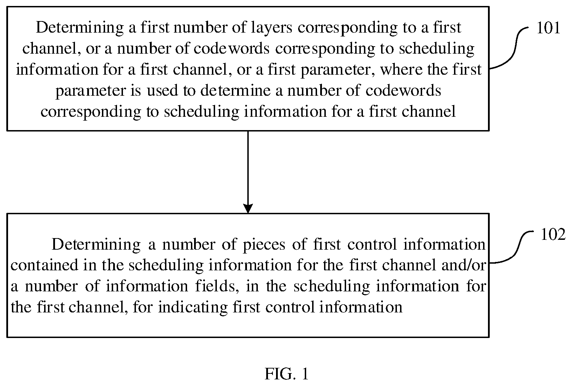

In order to solve one or more of the above problems, an embodiment of the present application provides a method for determining control information, which is performed by a user equipment (UE). FIG. 1 is a first schematic flowchart of a method for determining control information according to an embodiment of the present application. Referring to FIG. 1, the method for determining control information provided by an embodiment of the present application includes:
step 101: determining a first number of layers corresponding to a first channel, or a number of codewords corresponding to scheduling information for a first channel, or a first parameter, where the first parameter is used to determine a number of codewords corresponding to scheduling information for a first channel; and
step 102: determining, based on the first number of layers or the number of codewords or the first parameter, a number of pieces of first control information contained in the scheduling information for the first channel and/or a number of information fields, in the scheduling information for the first channel, for indicating first control information.

The UE first determines the first number of layers corresponding to the first channel or the number of codewords corresponding to the scheduling information, and then determines, based on the first number of layers or the number of codewords, the number of pieces of the first control information contained in the scheduling information for the first channel and/or the number of information fields, in the scheduling information for the first channel, for indicating the first control information. The UE is also called a terminal. The number of codewords corresponding to the scheduling information for the first channel is a number indicated by one signaling configured by the network or a number determined by the UE based on indication information or configuration of the network.

The first number of layers corresponding to the first channel is, for example, a value of the maximum number of PUSCH transmission layers supported by the UE in a serving *cell*/*maxRank*/*maxMIMO-Layers*/*a* number of layers allowed for PUSCH transmission, etc. the number of pieces of the first control information is, for example, the number of pieces of the control information (modulation and coding scheme (MCS), redundancy version (RV), or new data indicator (NDI)) corresponding to the transport blocks (TBs) contained in the DCI for scheduling PUSCH. If multiple pieces of the first control information are jointly coded, there is only one field for indicating the first control information; otherwise, the number of fields for indicating the first control information is the same as the number of pieces of the first control information.

The scheduling information may be downlink control information (DCI), such as DCI format 0_1, DCI format 0_2; or may be activation information for activating medium access control-control element (MAC-CE) corresponding to the first channel; or may be radio resource control (RRC) configuration information. For example, in case that the first channel is a configured grant (CG) based physical uplink share channel (PUSCH), the scheduling information is the RRC configuration information corresponding to the PUSCH.

Based on the first number of layers or the number of codewords or the first parameter, the number of pieces of the first control information contained in the scheduling information for the first channel is determined. For example, in case that the first number of layers is greater than 4, the scheduling information for the first channel contains two pieces of first control information; otherwise, in case that the first number of layers is smaller than or equal to 4, the scheduling information for the first channel contains one piece of first control information. In another case, in case that the number of codewords is 2, the scheduling information for the first channel contains two pieces of first control information; otherwise, in case that the number of codeword is 1 or is not 2 (for example, if no indication is received, it may only be determined that it is not 2), the scheduling information for the first channel contains one piece of first control information.

In the embodiment of the present application, by determining the maximum number of layers for channel transmission or determining the number of codewords corresponding to the scheduling information, and determining the number of pieces of the first control information and/or the number of information fields corresponding to the first number of layers or the number of codewords, a correspondence between the overhead of the scheduling information and the maximum number of layers or the number of codewords is achieved, the overhead of single codeword transmission is reduced, and the waste of information resources is avoided.

In an embodiment, according to the method for determining control information provided by the embodiment of the present application, the first number of layers includes one of the following:
a maximum number of layers determined based on restriction information for number of layers;
a number of layers configured by a network device; or
a maximum number of layers supported by the UE.

In an embodiment, the maximum number of layers determined based on the restriction information for number of layers is a maximum number of layers determined base on, for example, maxRank/restriction information for the number of PUSCH transmission layers. *maxRank* is configured in *PUSCH-Config* and is a subset of pre-coding matrix indicator (PMIs) addressed by TRIs from 1 to *ULmaxRank* (see TS 38.212). The field *maxRank* applies to DCI format 0_1, and the field *maxRankDCI-0-2* applies to DCI format 0_2 (see TS 38.331). The number of layers configured by the network device includes the maximum number of layers corresponding to the serving cell where the first channel is located, such as *maxMIMO-Layers. maxMIMO-Layers* is configured in *PUSCH-ServingCellConfig* and indicates the maximum MIMO layer to be used for PUSCH in all BWPs of the corresponding uplink (UL) of this serving cell (see TS 38.331). If present, the network sets *maxRank* to the same value. The field *maxMIMO-Layers* refers to DCI format *0_1. maxMIMO-Layers* is also configured in *PDSCH-ServingCellConfig* and indicates the maximum number of MIMO layers to be used for PDSCH in all BWPs of this serving cell. (see TS 38.331).

In 5G system, PUSCH and PDSCH are configured with *maxMIMO-Layers* separately. The maximum number of layers supported by the UE is, for example, the maximum number of PUSCH transmission layers supported by the UE in a serving cell.

In the embodiment of the present application, the first information is represented by the maximum number of layers determined based on the restriction information for number of layers, the number of layers configured by the network device, and the maximum number of layers supported by the UE, etc., which takes into account various channel parameters and corresponding types of scheduling information, has a wide range of applications, and greatly saves information overhead.

In an embodiment, according to the method for determining control information provided by any of the above embodiments of the present application, the number of layers configured by the network device includes one of the following:
a maximum number of layers corresponding to a type of the scheduling information; or
a maximum number of layers corresponding to a serving cell where the first channel is located.

In an embodiment, the maximum number of layers corresponding to the type of the scheduling information is, for example, that DCI format 0_1 and DCI format 0_2 share the same parameter *maxNrofCodeWordsScheduledByDCI,* or that each of DCI format 0_1 and DCI format 0_2 corresponds to their own parameters. Not only the maximum number of layers corresponding to the type of DCI for PUSCH, but also for PDSCH, different types of DCI for PDSCH have a corresponding maximum number of layers. The maximum number of layers corresponding to the serving cell where the first channel is located, for example, the base station may indicate, through *maxMIMO-Layers,* the maximum number of MIMO layers that the DCI for scheduling PUSCH in all BWPs of a serving cell may indicate. *maxNrofCodeWordsScheduledByDCI* is configured in *PDSCH-Config* and indicates the maximum number of codewords that a single DCI may schedule. This changes the number of MCS/RV/NDI bits in the DCI message from 1 to 2.

In the embodiment of the present application, the number of layers configured by the network device is represented by the maximum number of layers corresponding to the type of the scheduling information, and the maximum number of layers corresponding to the serving cell where the first channel is located, which takes into account various channel parameters and corresponding types of scheduling information, has a wide range of applications, and greatly saves information overhead.

In an embodiment, according to the method for determining control information provided by any of the above embodiments of the present application, the scheduling information is DCI, and the numbers of layers corresponding to different types of DCI are separately configured by the network device.

In an embodiment, the numbers of layers corresponding to different types of DCI are configured separately by the network device, that is, different DCI formats may be separately configured with the number of layers. For example, the *maxMIMO-Layers* corresponding to DCI format 0_1 and DCI format 0_2 are indicated separately. The base station may also indicate, through *maxRank,* the maximum number of layers (the maximum value of TRI) that the DCI for scheduling PUSCH may indicate, and the *maxRanks* corresponding to DCI format 0_1 and DCI format 0_2 are indicated separately. In an embodiment, DCI format 0_1 and DCI format 0_2 correspond to different restriction information for the number of PUSCH transmission layers. In this case, the number of codewords corresponding to the control information contained in DCI format 0_1 and the number of codewords corresponding to the control information contained in DCI format 0_2 are determined separately based on the restriction information for the number of PUSCH transmission layers corresponding to DCI format 0_1 and DCI format 0_2.

In the embodiment of the present application, the corresponding number of layers is configured for different types of DCI separately, having more diverse configurations and having a capability of adapting to different channel parameter conditions.

In an embodiment, according to the method for determining control information provided by any of the above embodiments of the present application, the information fields, in the scheduling information for the first channel, for indicating the first control information and the number of codewords corresponding to the scheduling information are in one-to-one correspondence.

In an embodiment, the number of codewords and the number of information fields of the control information are in one-to-one correspondence. For example, if the number of codewords enabled or indicated by the indication information for indicating the number of codewords contained in the DCI for scheduling PUSCH is 2, then the DCI for scheduling PUSCH contains control information corresponding to two transport blocks (two MCSs/RVs/NDIs); otherwise, the DCI for scheduling PUSCH contains control information corresponding to one transport block (one MCS/RV/NDI).

In the embodiments of the present application, the number of codewords and the information fields of the first control information are in one-to-one correspondence, which simplifies the configuration procedure and avoids redundant information overhead.

In an embodiment, according to the method for determining control information provided by any of the above embodiments of the present application, the method further includes:
determining the scheduling information based on the number of pieces of the first control information and/or the number of information fields for indicating the first control information.

In an embodiment, the scheduling information is determined based on the number of pieces of the first control information and/or the number of information fields for indicating the first control information. For example, in case that *maxRank*/*maxMIMO-Layers*/the value of maximum number of PUSCH transmission layers supported by the UE in a serving cell/the maximum value among the numbers of layers allowed for PUSCH transmission is greater than 4, the DCI overhead is determined based on the control information corresponding to two transport blocks contained in the DCI for scheduling PUSCH; otherwise, (in case that the value of the indication information for the maximum number of PUSCH transmission layers is smaller than or equal to 4), the DCI overhead is determined based on the control information corresponding to one transport block contained in the DCI for scheduling PUSCH.

In an embodiment, according to the method for determining control information provided by any of the above embodiments of the present application, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, the overhead of the scheduling information is determined based on the number of pieces of the first control information and/or the number of information fields for indicating the first control information. For example, the base station and the UE determine the DCI overhead based on *maxRank*/*maxMIMO-Layers*/the value of maximum number of PUSCH transmission layers supported by the UE in a serving cell/the number of layers allowed for PUSCH transmission. For example, the base station and the UE determine the DCI overhead (i.e., the number of bits contained in the DCI) and/or the coding method based on the number of transport blocks corresponding to control information contained in the DCI. Further, the base station codes the DCI based on the number of transport blocks corresponding to the control information contained in the DCI, and the UE performs blind detection and decoding on the DCI based on the number of transport blocks contained in the DCI. For different expected information, the UE uses corresponding radio network temporary identifier (RNTI) to perform a cyclic redundancy check (CRC) with the control channel element (CCE) information. If the CRC is successful, the UE knows that the information is needed by itself, and may further know the corresponding DCI format and modulation method, and then decodes the DCI content. This is the so-called blind detection procedure.

In an embodiment, according to the method for determining control information provided by any of the above embodiments of the present application, the method further includes:
transmitting information on the first channel based on the first control information.

In an embodiment, the UE transmits the information on the first channel based on the first control information. For example, the UE transmits PUSCH based on the control information indicated by the DCI. For example, after determining, based on the first number of layers, the number of codewords corresponding to the control information contained in DCI for scheduling PUSCH, the information on the PUSCH is transmitted based on the determined control information.

In an embodiment, according to the method for determining control information provided by any of the above embodiments of the present application, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, the control information corresponding to the transport block (codeword) includes one or more of the following:
MCS;
RV;
NDI;
pre-coding and/or number of layers indication information; or
SRI.

Referring to the above embodiments, the first control information may include MCS, RV or NDI, etc. the number of pieces of the first control information is, for example, the number of pieces of the control information (MCS/RV/NDI) corresponding to the transport blocks contained in the DCI for scheduling PUSCH. The first control information may also include pre-coding and/or number of layers indication information, SRI, etc. SRI is an SRS resource indicator. SRI is used to indicate a location of an SRS resource, containing the number of configured SRS resources, locating in an SRS resource set associated with a use of a parameter *txConfig* (including codebook or nonCodeBook), and being the maximum value of the layers supported by PUSCH.

In the embodiment of the present application, the first control information is represented by MCS, RV, NDI, pre-coding and/or number of layers indication information, and SRI, which takes into account various channel parameters and corresponding types of scheduling information, has a wide range of applications, and greatly saves information overhead.

In an embodiment, according to the method for determining control information provided by any of the above embodiments of the present application, determining, based on the first number of layers, the number of pieces of the first control information contained in the scheduling information for the first channel and/or the number of information fields, in the scheduling information for the first channel, for indicating the first control information includes:
determining, based on a value range of the first number of layers, the number of pieces of the first control information contained in the scheduling information for the first channel and/or the number of information fields, in the scheduling information for the first channel, for indicating the first control information.

In an embodiment, the UE determines the number of pieces of the first control information contained in the scheduling information for the first channel and/or the number of information fields, in the scheduling information for the first channel, for indicating the first control information based on the value range of the first number of layers. For example, the UE determines the number of pieces of the control information corresponding to the transport block contained in the DCI for scheduling PUSCH based on *maxRank*/*maxMIMO-Layers*/the value of maximum number of PUSCH transmission layers supported by the UE in a serving cell/the maximum value among the numbers of layers allowed for PUSCH transmission. In case that the first control information is jointly coded, there is only one field for indicating the first control information, so the number of pieces of the control information is determined. In case that the first control information is not jointly coded, the number of pieces of the first control information is the same as the number of fields indicating the first control information, and then the determined number of pieces of the control information is equal to the number of information fields. The solutions provided in the embodiment of the present application may be applied to the case of two pieces of control information, and may also be extended to the case of more control information.

In an embodiment, according to the method for determining control information provided by any of the above embodiments of the present application, determining, based on the value range of the first number of layers, the number of pieces of the first control information contained in the scheduling information for the first channel and/or the number of information fields, in the scheduling information for the first channel, for indicating the first control information includes:
in case that a maximum value of the first number of layers is greater than 4, determining that the number of pieces of the first control information contained in the scheduling information is 2; and
in case that a maximum value of the first number of layers is smaller than or equal to 4, determining that the number of pieces of the control information corresponding to the transport blocks contained in the scheduling information is 1.

In an embodiment, for example, the first number of layers is indicated by *maxMIMOLayers;* determining the number of pieces of the first control information contained in the scheduling information based on the first number of layers includes: in case that the *maxMIMOLayers* is greater than 4, determining the number of pieces of the control information corresponding to the transport blocks contained in the scheduling information to be 2; in case that the *maxMIMOLayers* is smaller than or equal to 4, determining the number of pieces of the control information corresponding to the transport blocks contained in the scheduling information to be 1. For example, the first number of layers is indicated by *maxRank;* determining the number of pieces of the first control information contained in the scheduling information based on the first number of layers includes: in case that the *maxRank* is greater than 4, determining the number of pieces of the control information corresponding to the transport blocks contained in the scheduling information to be 2; in case that the *maxRank* is smaller than or equal to 4, determining the number of pieces of the control information corresponding to the transport blocks contained in the scheduling information to be 1. Depending on the different channels and the different scheduling information for the different channels, etc., the specific parameters for determining the number of pieces of the first control information contained in the scheduling information based on the first number of layers may be different and may be changed according to actual conditions.

In an embodiment, according to the method for determining control information provided by any of the above embodiments of the present application, determining, based on the number of codewords, the number of pieces of the first control information contained in the scheduling information for the first channel and/or the number of information fields, in the scheduling information for the first channel, for indicating the first control information includes:
determining, based on a value range of the number of codewords, the number of pieces of the first control information contained in the scheduling information for the first channel and/or the number of information fields, in the scheduling information for the first channel, for indicating the first control information.

In an embodiment, the UE determines, based on the value range of the number of codewords, the number of pieces of the first control information contained in the scheduling information for the first channel and/or the number of information fields, in the scheduling information for the first channel, for indicating the first control information. For example, a specific parameter, such as *maxNrofCodeWordsScheduledByDCI,* is added in *PUSCH-Config,* to indicate the number of codewords scheduled by DCI for scheduling PUSCH, and then the number of pieces of the first control information contained in the scheduling information for the first channel is determined based on the value range of the number of codewords indicated by this parameter.

In an embodiment, according to the method for determining control information provided by any of the above embodiments of the present application, determining, based on the value range of the number of codewords, the number of pieces of the first control information contained in the scheduling information for the first channel and/or the number of information fields, in the scheduling information for the first channel, for indicating the first control information includes:
in case that the number of codewords is 2, determining that the number of pieces of the first control information contained in the scheduling information is 2; and
in case that the number of codeword is 1, determining that the number of pieces of the first control information contained in the scheduling information is 1.

In an embodiment, the UE may determine the number of pieces of the first control information contained in the scheduling information based on the number of codewords. For example, a specific parameter, such as *maxNrofCodeWordsScheduledByDCI,* is added in *PUSCH-Config.* In case that the parameter indicates 1, the DCI contains control information corresponding to one transport block; in case that the parameter indicates 2, the DCI contains control information corresponding to two transport blocks. In another case, if the parameter presents, the DCI contains control information corresponding to two transport blocks; if the parameter does not present, the DCI contains control information corresponding to one transport block.

The method for determining control information provided by the embodiment of the present application is used to solve a problem of excessive overhead of scheduling information in radio communication system, achieve a correspondence between the number of pieces of control information contained in the scheduling information and the maximum number of layers or the number of codewords, reduce the overhead of single codeword transmission, and avoid waste of information resources. The method for determining control information performed by the network device is described below. Those skilled in the art may understand that the method for determining control information performed by the network device corresponds to the method for determining control information performed by the UE, and may achieve corresponding technical effects.

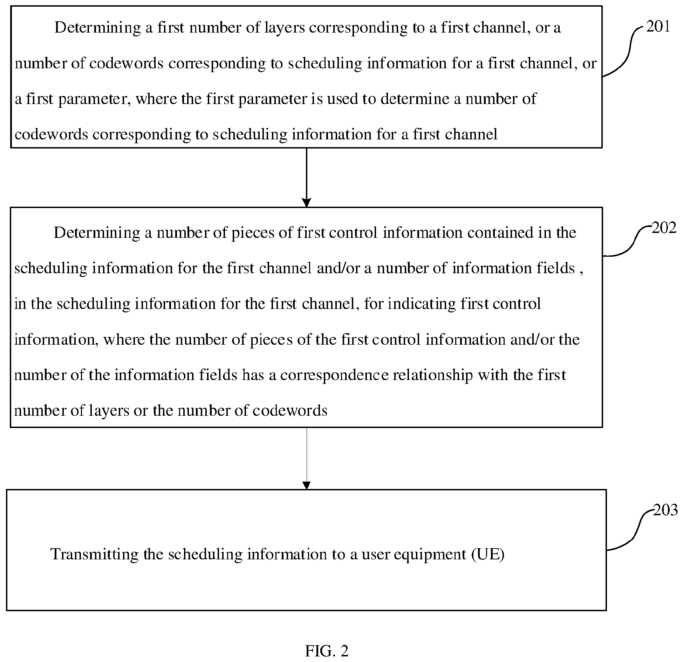

FIG. 2 is a second schematic flowchart of a method for determining control information according to an embodiment of the present application. Referring to FIG. 2, an embodiment of the present application provides a method for determining control information, which is performed by a network device, and includes:
step 201: determining a first number of layers corresponding to a first channel, or a number of codewords corresponding to scheduling information for a first channel, or a first parameter, where the first parameter is used to determine a number of codewords corresponding to scheduling information for a first channel;
step 202: determining a number of pieces of first control information contained in the scheduling information for the first channel and/or a number of information fields, in the scheduling information for the first channel, for indicating first control information, where the number of pieces of the first control information and/or the number of the information fields has a correspondence relationship with the first number of layers or the number of codewords; and
step 203: transmitting the scheduling information to a user equipment (UE).

In an embodiment, the execution order of step 201 and step 202 is not unique. Step 201 may be executed first and then step 202 is executed, or step 202 may be executed first and then step 201 is executed. The two steps may also be executed simultaneously. The specific connection is that there is a correspondence relationship between the number of pieces of the first control information and/or the number of information fields and the first number of layers or the number of codewords, and the two steps are executed based on the correspondence relationship.

After the network device determines the scheduling information, the network device transmits the scheduling information to the UE. The UE receives the scheduling information transmitted from the network device, and then the UE may transmit information on the first channel based on the scheduling information.

In an embodiment, according to the method for determining control information provided by any of the above embodiments of the present application, the first number of layers includes one of the following:
a maximum number of layers determined based on restriction information for number of layers;
a number of layers configured by the network device; or
a maximum number of layers supported by the UE.

In an embodiment, according to the method for determining control information provided by any of the above embodiments of the present application, the number of layers configured by the network device includes one of the following:
a maximum number of layers corresponding to a type of the scheduling information; or
a maximum number of layers corresponding to a serving cell where the first channel is located.

In an embodiment, according to the method for determining control information provided by any of the above embodiments of the present application, the scheduling information is downlink control information (DCI), and the numbers of layers corresponding to different types of DCI are separately configured by the network device.

In an embodiment, according to the method for determining control information provided by any of the above embodiments of the present application, the information fields, in the scheduling information for the first channel, for indicating the first control information and the number of codewords corresponding to the scheduling information are in one-to-one correspondence.

In an embodiment, according to the method for determining control information provided by any of the above embodiments of the present application, the method further includes:
determining the scheduling information based on the number of pieces of the first control information and/or the number of information fields for indicating the first control information.

In an embodiment, according to the method for determining control information provided by any of the above embodiments of the present application, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, according to the method for determining control information provided by any of the above embodiments of the present application, the method further includes:
transmitting information on the first channel based on the first control information.

In an embodiment, according to the method for determining control information provided by any of the above embodiments of the present application, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, according to the method for determining control information provided by any of the above embodiments of the present application, the number of pieces of the first control information and/or the number of the information fields has a correspondence relationship with the first number of layers includes:
a value range of the first number of layers has a correspondence relationship with the number of pieces of the first control information contained in the scheduling information for the first channel and/or the number of the information fields, in the scheduling information for the first channel, for indicating the first control information.

In an embodiment, according to the method for determining control information provided by any of the above embodiments of the present application, the value range of the first number of layers has the correspondence relationship with the number of pieces of the first control information contained in the scheduling information for the first channel and/or the number of the information fields, in the scheduling information for the first channel, for indicating the first control information includes:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

In an embodiment, according to the method for determining control information provided by any of the above embodiments of the present application, the number of pieces of the first control information and/or the number of the information fields has the correspondence relationship with the number of codewords includes:
a value range of the number of codewords has a correspondence relationship with the number of pieces of the first control information contained in the scheduling information for the first channel and/or the number of information fields, in the scheduling information for the first channel, for indicating the first control information.

In an embodiment, according to the method for determining control information provided by any of the above embodiments of the present application, the value range of the number of codewords has the correspondence relationship with the number of pieces of the first control information contained in the scheduling information for the first channel and/or the number of information fields, in the scheduling information for the first channel, for indicating the first control information includes:
in case that the number of codewords is 2, the number of pieces of the first control information contained in the scheduling information is 2; and
in case that the number of codeword is 1, the number of pieces of the first control information contained in the scheduling information is 1.

The methods provided in the various embodiments of the present application are based on the same concept. The implementations of the methods performed by the UE and the network device may refer to each other, and the same details are not repeated.

The methods provided in the above embodiments of the present application are further illustrated below through specific embodiments.

Embodiment 1: a specific parameter, such as *maxNrofCodeWordsScheduledByDCI,* is added in *PUSCH-Config,* to indicate the number of codewords scheduled by DCI for scheduling PUSCH.

In case that the parameter indicates 1, the DCI contains control information corresponding to one transport block; in case that the parameter indicates 2, the DCI contains control information corresponding to two transport blocks.

In another case, if the parameter presents, the DCI contains control information corresponding to two transport blocks; if the parameter does not present, the DCI contains control information corresponding to one transport block.

DCI format 0_1 and DCI format 0_2 share the same parameter *maxNrofCodeWordsScheduledByDCI;* or, each of DCI format 0_1 and DCI format 0_2 corresponds to their own parameters (eg, *maxNrofCodeWordsScheduledByDCI* for DCI format 0_1, *maxNrofCodeWordsScheduledByDCI-0-2* for DCI format 0_2).

Embodiment 2: the number of codewords corresponding to the control information contained in DCI for scheduling PUSCH is determined based on *maxMIMO-Layers.*

For DCI format 0_1, if *maxMIMO-Layers* is smaller than or equal to 4, the DCI contains control information corresponding to one transport block; if *maxMIMO-Layers* is greater than 4, the DCI contains control information corresponding to two transport blocks.

For DCI format 0_2, if *maxMIMO-LayersDCI-0-2* is smaller than or equal to 4, the DCI contains control information corresponding to one transport block; if *maxMIMO-LayersDCI-0-2* is greater than 4, the DCI contains control information corresponding to two transport blocks.

Advantages over Embodiment 1: no new signaling is required, but it may be indicated that the DCI contains control information corresponding to one codeword/two codewords, which saves RRC signaling overhead.

Embodiment 3: the number of codewords corresponding to the control information contained in DCI for scheduling PUSCH is determined based on *maxRank.*

For DCI format 0_1, if *maxRank* is smaller than or equal to 4, the DCI contains control information corresponding to one transport block; if *maxRank* is greater than 4, the DCI contains control information corresponding to two transport blocks.

For DCI format 0_2, if *maxRankDCI-0-2* is smaller than or equal to 4, the DCI contains control information corresponding to one transport block; if *maxRank* is greater than 4, the DCI contains control information corresponding to two transport blocks.

Advantages over Embodiment 1: no new signaling is required, but it may be indicated that the DCI contains control information corresponding to one codeword/two codewords, which saves RRC signaling overhead.

Embodiment 4: the number of codewords corresponding to the control information contained in DCI for scheduling PUSCH is determined based on the maximum number of PUSCH transmission layers supported by the UE in a serving cell.

If the maximum number of PUSCH transmission layers supported by the UE in the serving cell is smaller than or equal to 4, DCI format 0_1 and/or DCI format 0_2 contains control information corresponding to one transport block; if the maximum number of PUSCH transmission layers supported by the UE in the serving cell is greater than 4, DCI format 0_1 and/or DCI format 0_2 contains control information corresponding to two transport blocks.

Advantages over Embodiment 1: no new signaling is required, but it may be indicated that the DCI contains control information corresponding to one codeword/two codewords, which saves RRC signaling overhead.

Embodiment 5: if the base station indicates *maxMIMO-Layers,* the number of codewords corresponding to the control information contained in DCI for scheduling PUSCH is determined based on *maxMIMO-Layers* (such as the method in Embodiment 2); otherwise, the number of codewords corresponding to the control information contained in DCI for scheduling PUSCH is determined based on the maximum number of PUSCH transmission layers supported by the UE in the serving cell (such as the method in Embodiment 4).

Embodiment 6: if the base station indicates *maxNrofCodeWordsScheduledByDCI,* the number of codewords corresponding to the control information contained in DCI for scheduling PUSCH is determined based on *maxNrofCodeWordsScheduledByDCI* (such as the method in Embodiment 1); otherwise, the number of codewords corresponding to the control information contained in DCI for scheduling PUSCH is determined based on maxRank/restriction information for the number of PUSCH transmission layers (such as the method in Embodiment 3/in Embodiment 8).

Embodiment 7: if the base station indicates *maxNrofCodeWordsScheduledByDCI,* the number of codewords corresponding to the control information contained in DCI for scheduling PUSCH is determined based on *maxNrofCodeWordsScheduledByDCI* (such as the method in Embodiment 1); otherwise, the number of codewords corresponding to the control information contained in DCI for scheduling PUSCH is determined based on *maxMIMO-Layers* and/or the maximum number of PUSCH transmission layers supported by the UE in the serving cell (such as the method in Embodiment 2/4/5).

Embodiment 8: the number of codewords corresponding to the control information contained in DCI for scheduling PUSCH is determined based on the restriction information for the number of PUSCH transmission layers (perhaps *maxRank* is a special case thereof).

If all the numbers of layers indicated by the restriction information for number of layers are smaller than or equal to 4, the DCI contains control information corresponding to one transport block; if at least one of the numbers of layers indicated by the restriction information for number of layers is greater than 4, the DCI contains control information corresponding to two transport blocks.

In an embodiment, DCI format 0_1 and DCI format 0_2 correspond to the same restriction information for the number of PUSCH transmission layers.

In an embodiment, DCI format 0_1 and DCI format 0_2 correspond to different restriction information for the number of PUSCH transmission layers. In this case, the number of codewords corresponding to the control information contained in DCI format 0_1 and the number of codewords corresponding to the control information contained in DCI format 0_2 are determined separately based on the restriction information for the number of PUSCH transmission layers corresponding to DCI format 0_1 and DCI format 0_2.

In an embodiment, codebook-based PUSCH transmission and non-codebook-based PUSCH transmission use the same method, for example, both use the method in Embodiment 1/2/4/5.

In an embodiment, codebook-based PUSCH transmission and non-codebook-based PUSCH transmission use different methods as the following examples.

Example 1: codebook-based PUSCH transmission uses the method in Embodiment 6; non-codebook-based PUSCH transmission uses the method in Embodiment 7.

Example 2: codebook-based PUSCH transmission uses the method in Embodiment 3/Embodiment 8; non-codebook-based PUSCH transmission uses the method in Embodiment 5.

Embodiment 9: reception of restriction information for the number of PUSCH transmission layers transmitted from the base station (received by the UE, and transmitted from the base station).

The maximum value among the numbers of layers allowed for PUSCH transmission is determined based on the restriction information for the number of layers.

If the maximum value is smaller than or equal to 4, the DCI contains control information corresponding to one transport block; if the maximum value is greater than 4, the DCI contains control information corresponding to two transport blocks.

DCI format 0_1 and DCI format 0_2 share the same restriction information for the number of layers; or, each of DCI format 0_1 and DCI format 0_2 corresponds to their own restriction information for the number of layers.

In an embodiment, the codebook-based PUSCH and the non-codebook PUSCH share the same restriction information for number of layers; or, the base station indicates the restriction information for number of layers for the codebook-based PUSCH and the non-codebook PUSCH separately; or, only one of the codebook-based PUSCH and the non-codebook PUSCH is indicated with the restriction information for number of layers.

For each of the above embodiments, the base station codes the DCI based on the number of transport blocks corresponding to the control information contained in the DCI.

The UE performs blind detection and decoding on the DCI based on the number of transport blocks contained in the DCI.

The UE transmits the PUSCH based on the control information indicated by the DCI.

In an embodiment, the base station and the UE determine the DCI overhead (i.e., the number of bits contained in the DCI) and/or the coding method based on the number of transport blocks corresponding to control information contained in the DCI. That is, the DCI overhead is determined based on the *maxRank*/*maxMIMO-Layers*/*the* value of the maximum number of PUSCH transmission layers supported by the UE in the serving cell/the number of layers allowed for PUSCH transmission.

The present application is not only applicable to the scenario of PUSCH/PDSCH scheduled by DCI, but also to the scenario of PUSCH scheduled by semi-static configuration (for example, the PUSCH is configured grant based PUSCH, and its scheduling information is configured by RRC signaling, and the control information involved in the present application is also contained in the RRC signaling)/PDSCH (for example, the PDSCH is semi-statically configured or activated, and its scheduling information is configured by RRC signaling or MAC CE, and the control information involved in the present application is also included in the RRC signaling or MAC CE).

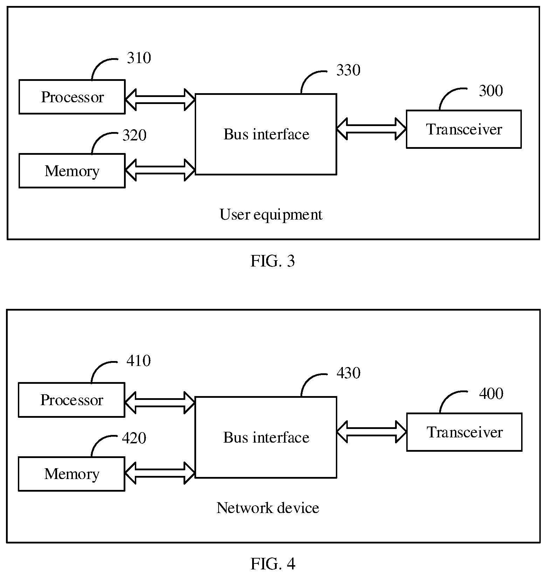

FIG. 3 is a schematic structural diagram of a user equipment (UE) according to an embodiment of the present application. As shown in FIG. 3, the UE includes a memory 320, a transceiver 300, and a processor 310;
where the memory 320 is used for storing a computer program; the transceiver 300 is used for receiving and transmitting data under control of the processor 310; and the processor 310 is used for reading the computer program in the memory 320 and performing the following operations:
determining a first number of layers corresponding to a first channel, or a number of codewords corresponding to scheduling information for a first channel, or a first parameter, where the first parameter is used to determine a number of codewords corresponding to scheduling information for a first channel; and
determining, based on the first number of layers or the number of codewords or the first parameter, a number of pieces of first control information contained in the scheduling information for the first channel and/or a number of information fields, in the scheduling information for the first channel, for indicating first control information.

In an embodiment, the transceiver 300 is used for receiving and transmitting data under control of the processor 310. In FIG. 3, a bus architecture may include any number of interconnected buses and bridges, which are linked together through various circuits of one or more processors represented by the processor 310 and one or more memories represented by the memory 320. The bus architecture may also link together various other circuits, such as peripherals, voltage regulators, and power management circuits, etc., which are well known in the art, and therefore are not further described in the present application. The bus interface 330 provides an interface. The transceiver 300 may include multiple elements, i.e., including a transmitter and a receiver, units for providing communication with various other devices over transmission media including wireless channels, wired channels, fiber optic cables, and the like. The processor 310 is responsible for managing the bus architecture and general processing, and the memory 320 may store data used by the processor 310 when performing operations.

In an embodiment, the processor 310 may be a central processing unit (CPU), an application specific integrated circuit (ASIC), a field-programmable gate array (FPGA), or a complex programmable logic device (CPLD), the processor may also use a multi-core architecture.

In an embodiment, according to the UE provided by any of the above embodiments of the present application, the first number of layers includes one of the following:
a maximum number of layers determined based on restriction information for number of layers;
a number of layers configured by a network device; or
a maximum number of layers supported by the UE.

In an embodiment, according to the UE provided by any of the above embodiments of the present application, the number of layers configured by the network device includes one of the following:
a maximum number of layers corresponding to a type of the scheduling information; or
a maximum number of layers corresponding to a serving cell where the first channel is located.

In an embodiment, according to the UE provided by any of the above embodiments of the present application, the scheduling information is downlink control information (DCI), and numbers of layers corresponding to different types of DCI are configured separately by the network device.

In an embodiment, according to the UE provided by any of the above embodiments of the present application, the information fields, in the scheduling information for the first channel, for indicating the first control information and a number of codewords corresponding to the scheduling information are in one-to-one correspondence.

In an embodiment, according to the UE provided by any of the above embodiments of the present application, the operations further include:
determining the scheduling information based on the number of pieces of the first control information and/or the number of information fields for indicating the first control information.

In an embodiment, according to the UE provided by any of the above embodiments of the present application, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, according to the UE provided by any of the above embodiments of the present application, the operations further include:
transmitting information on the first channel based on the first control information.

In an embodiment, according to the UE provided by any of the above embodiments of the present application, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, according to the UE provided by any of the above embodiments of the present application, determining, based on the first number of layers, the number of pieces of the first control information contained in the scheduling information for the first channel and/or the number of information fields, in the scheduling information for the first channel, for indicating the first control information includes:
determining, based on a value range of the first number of layers, the number of pieces of the first control information contained in the scheduling information for the first channel and/or the number of information fields, in the scheduling information for the first channel, for indicating the first control information.

In an embodiment, according to the UE provided by any of the above embodiments of the present application, determining, based on the value range of the first number of layers, the number of pieces of the first control information contained in the scheduling information for the first channel and/or the number of information fields, in the scheduling information for the first channel, for indicating the first control information includes:
in case that a maximum value of the first number of layers is greater than 4, determining that the number of pieces of the first control information contained in the scheduling information is 2; and
in case that a maximum value of the first number of layers is smaller than or equal to 4, determining that a number of pieces of control information corresponding to a transport block contained in the scheduling information is 1.

In an embodiment, according to the UE provided by any of the above embodiments of the present application, determining, based on the number of codewords, the number of pieces of the first control information contained in the scheduling information for the first channel and/or the number of information fields, in the scheduling information for the first channel, for indicating the first control information includes:
determining, based on a value range of the number of codewords, the number of pieces of the first control information contained in the scheduling information for the first channel and/or the number of information fields, in the scheduling information for the first channel, for indicating the first control information.

In an embodiment, according to the UE provided by any of the above embodiments of the present application, determining, based on the value range of the number of codewords, the number of pieces of the first control information contained in the scheduling information for the first channel and/or the number of information fields, in the scheduling information for the first channel, for indicating the first control information includes:
in case that the number of codewords is 2, determining that the number of pieces of the first control information contained in the scheduling information is 2; and
in case that the number of codeword is 1, determining that the number of pieces of the first control information contained in the scheduling information is 1.

It should be noted here that the above-mentioned UE provided by the embodiments of the present application may implement all the method steps implemented by the above-mentioned method embodiment with the UE as the execution subject, and may achieve the same technical effect. The same parts and beneficial effects in the embodiments as those in the method embodiments are not described in detail.

FIG. 4 is a schematic structural diagram of a network device according to an embodiment of the present application. As shown in FIG. 4, the network device includes a memory 420, a transceiver 400, and a processor 410;
where the memory 420 is used for storing a computer program; the transceiver 400 is used for receiving and transmitting data under control of the processor 410; and the processor 410 is used for reading the computer program in the memory 420 and performing the following operations:
determining a first number of layers corresponding to a first channel, or a number of codewords corresponding to scheduling information for a first channel, or a first parameter, where the first parameter is used to determine a number of codewords corresponding to scheduling information for a first channel;
determining a number of pieces of first control information contained in the scheduling information for the first channel and/or a number of information fields, in the scheduling information for the first channel, for indicating first control information, where the number of pieces of the first control information and/or the number of the information fields has a correspondence relationship with the first number of layers or the number of codewords; and
transmitting the scheduling information to a user equipment (UE).

In an embodiment, the transceiver 400 is used for receiving and transmitting data under control of the processor 410. In FIG. 4, a bus architecture may include any number of interconnected buses and bridges, which are linked together through various circuits of one or more processors represented by the processor 410 and one or more memories represented by the memory 420. The bus architecture may also link together various other circuits, such as peripherals, voltage regulators, and power management circuits, etc., which are well known in the art, and therefore are not further described in the present application. The bus interface 430 provides an interface. The transceiver 400 may include multiple elements, i.e., including a transmitter and a receiver, units for providing communication with various other devices over transmission media including wireless channels, wired channels, fiber optic cables, and the like. The processor 410 is responsible for managing the bus architecture and general processing, and the memory 420 may store data used by the processor 410 when performing operations.

In an embodiment, the processor 410 may be a central processing unit (CPU), an application specific integrated circuit (ASIC), a field-programmable gate array (FPGA), or a complex programmable logic device (CPLD), the processor may also use a multi-core architecture.

In an embodiment, according to the network device provided by any of the above embodiments of the present application, the first number of layers includes one of the following:
a maximum number of layers determined based on restriction information for number of layers;
a number of layers configured by the network device; or
a maximum number of layers supported by the UE.

In an embodiment, according to the network device provided by any of the above embodiments of the present application, the number of layers configured by the network device includes one of the following:
a maximum number of layers corresponding to a type of the scheduling information; or
a maximum number of layers corresponding to a serving cell where the first channel is located.

In an embodiment, according to the network device provided by any of the above embodiments of the present application, the scheduling information is downlink control information (DCI), and numbers of layers corresponding to different types of DCI are configured separately by the network device.

In an embodiment, according to the network device provided by any of the above embodiments of the present application, the information fields, in the scheduling information for the first channel, for indicating the first control information and a number of codewords corresponding to the scheduling information are in one-to-one correspondence.

In an embodiment, according to the network device provided by any of the above embodiments of the present application, the operations further include:
determining the scheduling information based on the number of pieces of the first control information and/or the number of information fields for indicating the first control information.

In an embodiment, according to the network device provided by any of the above embodiments of the present application, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, according to the network device provided by any of the above embodiments of the present application, the operations further include:
transmitting information on the first channel based on the first control information.

In an embodiment, according to the network device provided by any of the above embodiments of the present application, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, according to the network device provided by any of the above embodiments of the present application, the number of pieces of the first control information and/or the number of the information fields has the correspondence relationship with the first number of layers includes:
a value range of the first number of layers has a correspondence relationship with the number of pieces of the first control information contained in the scheduling information for the first channel and/or the number of the information fields, in the scheduling information for the first channel, for indicating the first control information.

In an embodiment, according to the network device provided by any of the above embodiments of the present application, the value range of the first number of layers has the correspondence relationship with the number of pieces of the first control information contained in the scheduling information for the first channel and/or the number of the information fields, in the scheduling information for the first channel, for indicating the first control information includes:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

In an embodiment, according to the network device provided by any of the above embodiments of the present application, the number of pieces of the first control information and/or the number of the information fields has the correspondence relationship with the number of codewords includes:
a value range of the number of codewords has a correspondence relationship with the number of pieces of the first control information contained in the scheduling information for the first channel and/or the number of information fields, in the scheduling information for the first channel, for indicating the first control information.

In an embodiment, according to the network device provided by any of the above embodiments of the present application, the value range of the number of codewords has the correspondence relationship with the number of pieces of the first control information contained in the scheduling information for the first channel and/or the number of information fields, in the scheduling information for the first channel, for indicating the first control information includes:
in case that the number of codewords is 2, the number of pieces of the first control information contained in the scheduling information is 2; and
in case that the number of codeword is 1, the number of pieces of the first control information contained in the scheduling information is 1.

It should be noted here that the above-mentioned network device provided by the embodiments of the present application may implement all the method steps implemented by the above-mentioned method embodiment with the network device as the execution subject, and may achieve the same technical effect. The same parts and beneficial effects in the embodiments as those in the method embodiments are not described in detail.

The embodiments of the present application provide methods and apparatuses for determining control information, where the methods and the apparatuses are based on the same concept. Since the methods and apparatuses solve problems in similar principles, the implementation of the apparatuses and methods may be referred to each other, and the same details are not repeated.

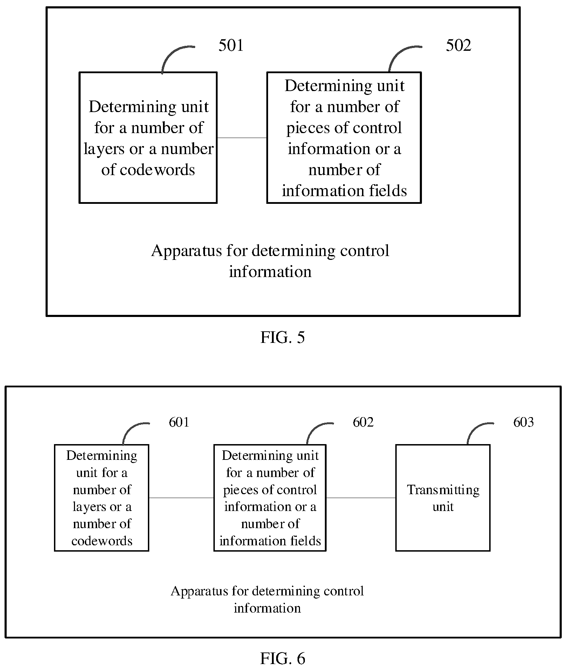

FIG. 5 is a first schematic structural diagram of an apparatus for determining control information according to an embodiment of the present application. Referring to FIG. 5, the apparatus for determining control information provided by an embodiment of the present application is for use in a user equipment (UE), including:
a determining unit 501 for a number of layers or a number of codewords, used for determining a first number of layers corresponding to a first channel, or a number of codewords corresponding to scheduling information for a first channel, or a first parameter, where the first parameter is used to determine a number of codewords corresponding to scheduling information for a first channel; and
a determining unit 502 for a number of pieces of control information or a number of information fields, used for determining, based on the first number of layers or the number of codewords or the first parameter, a number of pieces of first control information contained in the scheduling information for the first channel and/or a number of information fields, in the scheduling information for the first channel, for indicating first control information.

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

In an embodiment, according to the apparatus for determining control information provided by any of the above embodiments of the present application, the first number of layers includes one of the following:
a maximum number of layers determined based on restriction information for number of layers;
a number of layers configured by a network device; or
a maximum number of layers supported by the UE.

In an embodiment, according to the apparatus for determining control information provided by any of the above embodiments of the present application, the number of layers configured by the network device includes one of the following:
a maximum number of layers corresponding to a type of the scheduling information; or
a maximum number of layers corresponding to a serving cell where the first channel is located.

In an embodiment, according to the apparatus for determining control information provided by any of the above embodiments of the present application, the scheduling information is downlink control information (DCI), and numbers of layers corresponding to different types of DCI are configured separately by the network device.

In an embodiment, according to the apparatus for determining control information provided by any of the above embodiments of the present application, the information fields, in the scheduling information for the first channel, for indicating the first control information and a number of codewords corresponding to the scheduling information are in one-to-one correspondence.

In an embodiment, according to the apparatus for determining control information provided by any of the above embodiments of the present application, the apparatus further includes:
determining the scheduling information based on the number of pieces of the first control information and/or the number of information fields for indicating the first control information.

In an embodiment, according to the apparatus for determining control information provided by any of the above embodiments of the present application, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, according to the apparatus for determining control information provided by any of the above embodiments of the present application, the apparatus further includes:
transmitting information on the first channel based on the first control information.

In an embodiment, according to the apparatus for determining control information provided by any of the above embodiments of the present application, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, according to the apparatus for determining control information provided by any of the above embodiments of the present application, determining, based on the first number of layers, the number of pieces of the first control information contained in the scheduling information for the first channel and/or the number of information fields, in the scheduling information for the first channel, for indicating the first control information includes:
determining, based on a value range of the first number of layers, the number of pieces of the first control information contained in the scheduling information for the first channel and/or the number of information fields, in the scheduling information for the first channel, for indicating the first control information.

In an embodiment, according to the apparatus for determining control information provided by any of the above embodiments of the present application, determining, based on the value range of the first number of layers, the number of pieces of the first control information contained in the scheduling information for the first channel and/or the number of information fields, in the scheduling information for the first channel, for indicating the first control information includes:
in case that a maximum value of the first number of layers is greater than 4, determining that the number of pieces of the first control information contained in the scheduling information is 2; and
in case that a maximum value of the first number of layers is smaller than or equal to 4, determining that a number of pieces of control information corresponding to a transport block contained in the scheduling information is 1.

In an embodiment, according to the apparatus for determining control information provided by any of the above embodiments of the present application, determining, based on the number of codewords, the number of pieces of the first control information contained in the scheduling information for the first channel and/or the number of information fields, in the scheduling information for the first channel, for indicating the first control information includes:
determining, based on a value range of the number of codewords, the number of pieces of the first control information contained in the scheduling information for the first channel and/or the number of information fields, in the scheduling information for the first channel, for indicating the first control information.

In an embodiment, according to the apparatus for determining control information provided by any of the above embodiments of the present application, determining, based on the value range of the number of codewords, the number of pieces of the first control information contained in the scheduling information for the first channel and/or the number of information fields, in the scheduling information for the first channel, for indicating the first control information includes:
in case that the number of codewords is 2, determining that the number of pieces of the first control information contained in the scheduling information is 2; and
in case that the number of codeword is 1, determining that the number of pieces of the first control information contained in the scheduling information is 1.

FIG. 6 is a second schematic structural diagram of an apparatus for determining control information according to an embodiment of the present application. Referring to FIG. 6, the apparatus for determining control information provided by an embodiment of the present application is for use in a network device, including:
a determining unit 601 for a number of layers or a number of codewords, used for determining a first number of layers corresponding to a first channel, or a number of codewords corresponding to scheduling information for a first channel, or a first parameter, where the first parameter is used to determine a number of codewords corresponding to scheduling information for a first channel;
a determining unit 602 for a number of pieces of control information or a number of information fields, used for determining a number of pieces of first control information contained in the scheduling information for the first channel and/or a number of information fields, in the scheduling information for the first channel, for indicating first control information, where the number of pieces of the first control information and/or the number of the information fields has a correspondence relationship with the first number of layers or the number of codewords; and
a transmitting unit 603, used for transmitting the scheduling information to a user equipment (UE).

It should be noted that, the division of units in the embodiments of the present application is schematic, and is only a logical function division, and there may be other division manners in actual implementation. In addition, the functional units in the various embodiments of the present application may be integrated into one processing unit, or each unit may exist alone physically, or two or more units may be integrated into one unit. The above-mentioned integrated unit may be implemented in the form of hardware or software functional unit.

If the integrated unit is implemented in the form of a software functional unit and sold or used as an independent product, it may be stored in a processor readable storage medium. Based on such understanding, the solutions of the present application in essence or a part of the solutions that contributes to the prior art, or all or part of the solutions, may be embodied in the form of a software product, which is stored in a storage medium, including several instructions to cause a computer device (which may be a personal computer, server, or network device, etc.) or a processor to perform all or part of the steps of the methods described in the respective embodiments of the present application. The storage medium described above includes various media that may store program codes, such as a U disk, a mobile hard disk, a read-only memory (ROM), a random access memory (RAM), a magnetic disk, or a compact disk.

In an embodiment, according to the apparatus for determining control information provided by any of the above embodiments of the present application, the first number of layers includes one of the following:
a maximum number of layers determined based on restriction information for number of layers;
a number of layers configured by the network device; or
a maximum number of layers supported by the UE.

In an embodiment, according to the apparatus for determining control information provided by any of the above embodiments of the present application, the number of layers configured by the network device includes one of the following:
a maximum number of layers corresponding to a type of the scheduling information; or
a maximum number of layers corresponding to a serving cell where the first channel is located.

In an embodiment, according to the apparatus for determining control information provided by any of the above embodiments of the present application, the scheduling information is downlink control information (DCI), and numbers of layers corresponding to different types of DCI are configured separately by the network device.

In an embodiment, according to the apparatus for determining control information provided by any of the above embodiments of the present application, the information fields, in the scheduling information for the first channel, for indicating the first control information and a number of codewords corresponding to the scheduling information are in one-to-one correspondence.

In an embodiment, according to the apparatus for determining control information provided by any of the above embodiments of the present application, the apparatus further includes:
determining the scheduling information based on the number of pieces of the first control information and/or the number of information fields for indicating the first control information.

In an embodiment, according to the apparatus for determining control information provided by any of the above embodiments of the present application, determining the scheduling information based on the number of pieces of the first control information and/or the number of information fields for indicating the first control information includes:
determining an overhead of the scheduling information based on the number of pieces of the first control information and/or the number of information fields for indicating the first control information; and
based on the overhead, detecting the scheduling information and/or decoding the scheduling information.

In an embodiment, according to the apparatus for determining control information provided by any of the above embodiments of the present application, the apparatus further includes:
transmitting information on the first channel based on the first control information.

In an embodiment, according to the apparatus for determining control information provided by any of the above embodiments of the present application, the first control information includes one or more of the following:
modulation and coding scheme (MCS);
redundancy version (RV);
new data indicator (NDI);
pre-coding and/or number of layers indication information; or
sounding reference signal (SRS) resource indicator (SRI).

In an embodiment, according to the apparatus for determining control information provided by any of the above embodiments of the present application, the number of pieces of the first control information and/or the number of the information fields has the correspondence relationship with the first number of layers includes:
a value range of the first number of layers has a correspondence relationship with the number of pieces of the first control information contained in the scheduling information for the first channel and/or the number of the information fields, in the scheduling information for the first channel, for indicating the first control information.

In an embodiment, according to the apparatus for determining control information provided by any of the above embodiments of the present application, the value range of the first number of layers has the correspondence relationship with the number of pieces of the first control information contained in the scheduling information for the first channel and/or the number of the information fields, in the scheduling information for the first channel, for indicating the first control information includes:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

In an embodiment, according to the apparatus for determining control information provided by any of the above embodiments of the present application, the number of pieces of the first control information and/or the number of the information fields has the correspondence relationship with the number of codewords includes:
a value range of the number of codewords has a correspondence relationship with the number of pieces of the first control information contained in the scheduling information for the first channel and/or the number of information fields, in the scheduling information for the first channel, for indicating the first control information.

In an embodiment, according to the apparatus for determining control information provided by any of the above embodiments of the present application, the value range of the number of codewords has the correspondence relationship with the number of pieces of the first control information contained in the scheduling information for the first channel and/or the number of information fields, in the scheduling information for the first channel, for indicating the first control information includes:
in case that the number of codewords is 2, the number of pieces of the first control information contained in the scheduling information is 2; and
in case that the number of codeword is 1, the number of pieces of the first control information contained in the scheduling information is 1.

An embodiment of the present application further provides a processor-readable storage medium, where the processor-readable storage medium stores a computer program, and the computer program is used to cause the processor to perform any of the methods for determining control information provided in the above embodiments.

The processor-readable storage medium may be any available medium or data storage device that may be accessed by the processor, including but not limited to magnetic storage (such as floppy disks, hard disks, magnetic tapes, magneto-optical disks (MO)), optical storage (such as CDs, DVDs, BDs, HVDs, etc.), and semiconductor storage (such as ROM, EPROM, EEPROM, non-volatile memory (NAND FLASH), solid-state drives (SSDs)), etc.

As will be appreciated by those skilled in the art, embodiments of the present application may be provided as methods, systems, or computer program products. Therefore, the present application may take the form of an entirely hardware embodiment, an entirely software embodiment, or an embodiment combining software and hardware. Moreover, the present application may take the form of a computer program product implemented on one or more computer-usable storage media having computer-usable program code, including but not limited to disk storage and optical storage, etc.

The present application is described with reference to flow charts and/or block diagrams of methods, apparatus (systems), and computer program products according to embodiments of the present application. It will be understood that each flow and/or block in the flow charts and/or block diagrams, and combinations thereof may be implemented by computer-executable instructions. These computer-executable instructions may be provided to processors of a general purpose computer, a special purpose computer, an embedded processor or other programmable data processing device to produce a machine and the instructions executed by the processor of the computer or other programmable data processing device form a means for performing the functions specified in one or more flows in a flowchart and/or one or more blocks of a block diagram.

These processor-executable instructions may also be stored in a processor readable memory capable of directing a computer or other programmable data processing apparatus to operate in a particular manner, and the instructions stored in the processor readable memory may result in a manufacture including instruction means, the instruction means may perform the functions specified in one or more flows of the flowchart and/or one or more blocks of the block diagram.

These processor-executable instructions may also be loaded onto a computer or other programmable data processing device to cause a series of operational steps to be performed on the computer or other programmable device to produce a computer-implemented process and instructions performed on the computer or other programmable devices provide steps for performing the functions specified in one or more flows of the flowchart and/or one or more blocks of the block diagram.

It will be apparent to those skilled in the art that various modifications and variations may be made in the present application without departing from the scope of the present application. Thus, provided that these modifications and variations of the present application fall within the scope of the claims of the present application and their equivalents, the present application is also intended to cover such modifications and variations.

## Claims

1. A method for determining control information, performed by a user equipment, UE, comprising:
determining a first number of layers corresponding to a first channel, or a number of codewords corresponding to scheduling information for a first channel, or a first parameter, wherein the first parameter is used to determine a number of codewords corresponding to scheduling information for a first channel; and
determining, based on the first number of layers or the number of codewords or the first parameter, a number of pieces of first control information contained in the scheduling information for the first channel and/or a number of information fields, in the scheduling information for the first channel, for indicating first control information.

2. The method of claim 1, wherein the first number of layers comprises one of the following:
a maximum number of layers determined based on restriction information for number of layers;
a number of layers configured by a network device; or
a maximum number of layers supported by the UE.

3. The method of claim 2, wherein the number of layers configured by the network device comprises one of the following:
a maximum number of layers corresponding to a type of the scheduling information; or
a maximum number of layers corresponding to a serving cell where the first channel is located.

4. The method of claim 3, wherein the scheduling information is downlink control information, DCI, and numbers of layers corresponding to different types of DCI are configured separately by the network device.

5. The method of any of claims 1 to 4, wherein the information fields, in the scheduling information for the first channel, for indicating the first control information and a number of codewords corresponding to the scheduling information are in one-to-one correspondence.

6. The method of any of claims 1 to 5, further comprising:
determining the scheduling information based on the number of pieces of the first control information and/or the number of information fields for indicating the first control information.

7. The method of claim 6, wherein determining the scheduling information based on the number of pieces of the first control information and/or the number of information fields for indicating the first control information comprises:
determining an overhead of the scheduling information based on the number of pieces of the first control information and/or the number of information fields for indicating the first control information; and
based on the overhead, detecting the scheduling information and/or decoding the scheduling information.

8. The method of claim 7, further comprising:
transmitting information on the first channel based on the first control information.

9. The method of any of claims 1 to 8, wherein the first control information comprises one or more of the following:
modulation and coding scheme, MCS;
redundancy version, RV;
new data indicator, NDI;
pre-coding and/or number of layers indication information; or
sounding reference signal, SRS, resource indicator, SRI.

10. The method of any of claims 1 to 9, wherein determining, based on the first number of layers, the number of pieces of the first control information contained in the scheduling information for the first channel and/or the number of information fields, in the scheduling information for the first channel, for indicating the first control information comprises:
determining, based on a value range of the first number of layers, the number of pieces of the first control information contained in the scheduling information for the first channel and/or the number of information fields, in the scheduling information for the first channel, for indicating the first control information.

11. The method of claim 10, wherein determining, based on the value range of the first number of layers, the number of pieces of the first control information contained in the scheduling information for the first channel and/or the number of information fields, in the scheduling information for the first channel, for indicating the first control information comprises:
in case that a maximum value of the first number of layers is greater than 4, determining that the number of pieces of the first control information contained in the scheduling information is 2; and
in case that a maximum value of the first number of layers is smaller than or equal to 4, determining that a number of pieces of control information corresponding to a transport block contained in the scheduling information is 1.

12. The method of any of claims 1 to 9, wherein determining, based on the number of codewords, the number of pieces of the first control information contained in the scheduling information for the first channel and/or the number of information fields, in the scheduling information for the first channel, for indicating the first control information comprises:
determining, based on a value range of the number of codewords, the number of pieces of the first control information contained in the scheduling information for the first channel and/or the number of information fields, in the scheduling information for the first channel, for indicating the first control information.

13. The method of claim 12, wherein determining, based on the value range of the number of codewords, the number of pieces of the first control information contained in the scheduling information for the first channel and/or the number of information fields, in the scheduling information for the first channel, for indicating the first control information comprises:
in case that the number of codewords is 2, determining that the number of pieces of the first control information contained in the scheduling information is 2; and
in case that the number of codeword is 1, determining that the number of pieces of the first control information contained in the scheduling information is 1.

14. A method for determining control information, performed by a network device, comprising:
determining a first number of layers corresponding to a first channel, or a number of codewords corresponding to scheduling information for a first channel, or a first parameter, wherein the first parameter is used to determine a number of codewords corresponding to scheduling information for a first channel;
determining a number of pieces of first control information contained in the scheduling information for the first channel and/or a number of information fields, in the scheduling information for the first channel, for indicating first control information, wherein the number of pieces of the first control information and/or the number of the information fields has a correspondence relationship with the first number of layers or the number of codewords; and
transmitting the scheduling information to a user equipment, UE.

15. The method of claim 14, wherein the first number of layers comprises one of the following:
a maximum number of layers determined based on restriction information for number of layers;
a number of layers configured by the network device; or
a maximum number of layers supported by the UE.

16. The method of claim 15, wherein the number of layers configured by the network device comprises one of the following:
a maximum number of layers corresponding to a type of the scheduling information; or
a maximum number of layers corresponding to a serving cell where the first channel is located.

17. The method of claim 16, wherein the scheduling information is downlink control information, DCI, and numbers of layers corresponding to different types of DCI are configured separately by the network device.

18. The method of any of claims 14 to 17, wherein the information fields, in the scheduling information for the first channel, for indicating the first control information and a number of codewords corresponding to the scheduling information are in one-to-one correspondence.

19. The method of any of claims 14 to 18, further comprising:
determining the scheduling information based on the number of pieces of the first control information and/or the number of information fields for indicating the first control information.

20. The method of claim 19, wherein determining the scheduling information based on the number of pieces of the first control information and/or the number of information fields for indicating the first control information comprises:
determining an overhead of the scheduling information based on the number of pieces of the first control information and/or the number of information fields for indicating the first control information; and
based on the overhead, detecting the scheduling information and/or decoding the scheduling information.

21. The method of claim 20, further comprising:
transmitting information on the first channel based on the first control information.

22. The method of any of claims 14 to 21, wherein the first control information comprises one or more of the following:
modulation and coding scheme, MCS;
redundancy version, RV;
new data indicator, NDI;
pre-coding and/or number of layers indication information; or
sounding reference signal, SRS, resource indicator, SRI.

23. The method of any of claims 14 to 22, wherein the number of pieces of the first control information and/or the number of the information fields has the correspondence relationship with the first number of layers comprises:
a value range of the first number of layers has a correspondence relationship with the number of pieces of the first control information contained in the scheduling information for the first channel and/or the number of the information fields, in the scheduling information for the first channel, for indicating the first control information.

24. The method of claim 23, wherein the value range of the first number of layers has the correspondence relationship with the number of pieces of the first control information contained in the scheduling information for the first channel and/or the number of the information fields, in the scheduling information for the first channel, for indicating the first control information comprises:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

25. The method of any of claims 14 to 22, wherein the number of pieces of the first control information and/or the number of the information fields has the correspondence relationship with the number of codewords comprises:
a value range of the number of codewords has a correspondence relationship with the number of pieces of the first control information contained in the scheduling information for the first channel and/or the number of information fields, in the scheduling information for the first channel, for indicating the first control information.

26. The method of claim 25, wherein the value range of the number of codewords has the correspondence relationship with the number of pieces of the first control information contained in the scheduling information for the first channel and/or the number of information fields, in the scheduling information for the first channel, for indicating the first control information comprises:
in case that the number of codewords is 2, the number of pieces of the first control information contained in the scheduling information is 2; and
in case that the number of codeword is 1, the number of pieces of the first control information contained in the scheduling information is 1.

27. A user equipment, UE, comprising: a memory, a transceiver, and a processor;
wherein the memory is used for storing a computer program; the transceiver is used for receiving and transmitting data under control of the processor; and the processor is used for reading the computer program in the memory and performing the following operations:
determining a first number of layers corresponding to a first channel, or a number of codewords corresponding to scheduling information for a first channel, or a first parameter, wherein the first parameter is used to determine a number of codewords corresponding to scheduling information for a first channel; and
determining, based on the first number of layers or the number of codewords or the first parameter, a number of pieces of first control information contained in the scheduling information for the first channel and/or a number of information fields, in the scheduling information for the first channel, for indicating first control information.

28. The UE of claim 27, wherein the first number of layers comprises one of the following:
a maximum number of layers determined based on restriction information for number of layers;
a number of layers configured by a network device; or
a maximum number of layers supported by the UE.

29. The UE of claim 28, wherein the number of layers configured by the network device comprises one of the following:
a maximum number of layers corresponding to a type of the scheduling information; or
a maximum number of layers corresponding to a serving cell where the first channel is located.

30. The UE of claim 29, wherein the scheduling information is downlink control information, DCI, and numbers of layers corresponding to different types of DCI are configured separately by the network device.

31. The UE of any of claims 27 to 30, wherein the information fields, in the scheduling information for the first channel, for indicating the first control information and a number of codewords corresponding to the scheduling information are in one-to-one correspondence.

32. The UE of any of claims 27 to 31, wherein the operations further comprise:
determining the scheduling information based on the number of pieces of the first control information and/or the number of information fields for indicating the first control information.

33. The UE of claim 32, wherein determining the scheduling information based on the number of pieces of the first control information and/or the number of information fields for indicating the first control information comprises:
determining an overhead of the scheduling information based on the number of pieces of the first control information and/or the number of information fields for indicating the first control information; and
based on the overhead, detecting the scheduling information and/or decoding the scheduling information.

34. The UE of claim 33, wherein the operations further comprise:
transmitting information on the first channel based on the first control information.

35. The UE of any of claims 27 to 34, wherein the first control information comprises one or more of the following:
modulation and coding scheme, MCS;
redundancy version RV;
new data indicator, NDI;
pre-coding and/or number of layers indication information; or
sounding reference signal, SRS, resource indicator, SRI.

36. The UE of any of claims 27 to 35, wherein determining, based on the first number of layers, the number of pieces of the first control information contained in the scheduling information for the first channel and/or the number of information fields, in the scheduling information for the first channel, for indicating the first control information comprises:
determining, based on a value range of the first number of layers, the number of pieces of the first control information contained in the scheduling information for the first channel and/or the number of information fields, in the scheduling information for the first channel, for indicating the first control information.

37. The UE of claim 36, wherein determining, based on the value range of the first number of layers, the number of pieces of the first control information contained in the scheduling information for the first channel and/or the number of information fields, in the scheduling information for the first channel, for indicating the first control information comprises:
in case that a maximum value of the first number of layers is greater than 4, determining that the number of pieces of the first control information contained in the scheduling information is 2; and
in case that a maximum value of the first number of layers is smaller than or equal to 4, determining that a number of pieces of control information corresponding to a transport block contained in the scheduling information is 1.

38. The UE of any of claims 27 to 35, wherein determining, based on the number of codewords, the number of pieces of the first control information contained in the scheduling information for the first channel and/or the number of information fields, in the scheduling information for the first channel, for indicating the first control information comprises:
determining, based on a value range of the number of codewords, the number of pieces of the first control information contained in the scheduling information for the first channel and/or the number of information fields, in the scheduling information for the first channel, for indicating the first control information.

39. The UE of claim 38, wherein determining, based on the value range of the number of codewords, the number of pieces of the first control information contained in the scheduling information for the first channel and/or the number of information fields, in the scheduling information for the first channel, for indicating the first control information comprises:
in case that the number of codewords is 2, determining that the number of pieces of the first control information contained in the scheduling information is 2; and
in case that the number of codeword is 1, determining that the number of pieces of the first control information contained in the scheduling information is 1.

40. A network device, comprising: a memory, a transceiver, and a processor;
wherein the memory is used for storing a computer program; the transceiver is used for receiving and transmitting data under control of the processor; and the processor is used for reading the computer program in the memory and performing the following operations:
determining a first number of layers corresponding to a first channel, or a number of codewords corresponding to scheduling information for a first channel, or a first parameter, wherein the first parameter is used to determine a number of codewords corresponding to scheduling information for a first channel;
determining a number of pieces of first control information contained in the scheduling information for the first channel and/or a number of information fields, in the scheduling information for the first channel, for indicating first control information, wherein the number of pieces of the first control information and/or the number of the information fields has a correspondence relationship with the first number of layers or the number of codewords; and
transmitting the scheduling information to a user equipment, UE.

41. The network device of claim 40, wherein the first number of layers comprises one of the following:
a maximum number of layers determined based on restriction information for number of layers;
a number of layers configured by the network device; or
a maximum number of layers supported by the UE.

42. The network device of claim 41, wherein the number of layers configured by the network device comprises one of the following:
a maximum number of layers corresponding to a type of the scheduling information; or
a maximum number of layers corresponding to a serving cell where the first channel is located.

43. The network device of claim 42, wherein the scheduling information is downlink control information, DCI, and numbers of layers corresponding to different types of DCI are configured separately by the network device.

44. The network device of any of claims 40 to 43, wherein the information fields, in the scheduling information for the first channel, for indicating the first control information and a number of codewords corresponding to the scheduling information are in one-to-one correspondence.

45. The network device of any of claims 14 to 44, wherein the operations further comprise:
determining the scheduling information based on the number of pieces of the first control information and/or the number of information fields for indicating the first control information.

46. The network device of claim 45, wherein determining the scheduling information based on the number of pieces of the first control information and/or the number of information fields for indicating the first control information comprises:
determining an overhead of the scheduling information based on the number of pieces of the first control information and/or the number of information fields for indicating the first control information; and
based on the overhead, detecting the scheduling information and/or decoding the scheduling information.

47. The network device of claim 46, wherein the operations further comprise:
transmitting information on the first channel based on the first control information.

48. The network device of any of claims 40 to 47, wherein the first control information comprises one or more of the following:
modulation and coding scheme, MCS;
redundancy version, RV;
new data indicator, NDI;
pre-coding and/or number of layers indication information; or
sounding reference signal, SRS, resource indicator, SRI.

49. The network device of any of claims 40 to 48, wherein the number of pieces of the first control information and/or the number of the information fields has the correspondence relationship with the first number of layers comprises:
a value range of the first number of layers has a correspondence relationship with the number of pieces of the first control information contained in the scheduling information for the first channel and/or the number of the information fields, in the scheduling information for the first channel, for indicating the first control information.

50. The network device of claim 49, wherein the value range of the first number of layers has the correspondence relationship with the number of pieces of the first control information contained in the scheduling information for the first channel and/or the number of the information fields, in the scheduling information for the first channel, for indicating the first control information comprises:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

51. The network device of any of claims 40 to 48, wherein the number of pieces of the first control information and/or the number of the information fields has the correspondence relationship with the number of codewords comprises:
a value range of the number of codewords has a correspondence relationship with the number of pieces of the first control information contained in the scheduling information for the first channel and/or the number of information fields, in the scheduling information for the first channel, for indicating the first control information.

52. The network device of claim 51, wherein the value range of the number of codewords has the correspondence relationship with the number of pieces of the first control information contained in the scheduling information for the first channel and/or the number of information fields, in the scheduling information for the first channel, for indicating the first control information comprises:
in case that the number of codewords is 2, the number of pieces of the first control information contained in the scheduling information is 2; and
in case that the number of codeword is 1, the number of pieces of the first control information contained in the scheduling information is 1.

53. An apparatus for determining control information, comprising:
a determining unit for a number of layers or a number of codewords, used for determining a first number of layers corresponding to a first channel, or a number of codewords corresponding to scheduling information for a first channel, or a first parameter, wherein the first parameter is used to determine a number of codewords corresponding to scheduling information for a first channel; and
a determining unit for a number of pieces of control information or a number of information fields, used for determining, based on the first number of layers or the number of codewords or the first parameter, a number of pieces of first control information contained in the scheduling information for the first channel and/or a number of information fields, in the scheduling information for the first channel, for indicating first control information.

54. The apparatus of claim 53, wherein the first number of layers comprises one of the following:
a maximum number of layers determined based on restriction information for number of layers;
a number of layers configured by a network device; or
a maximum number of layers supported by the UE.

55. The apparatus of claim 54, wherein the number of layers configured by the network device comprises one of the following:
a maximum number of layers corresponding to a type of the scheduling information; or
a maximum number of layers corresponding to a serving cell where the first channel is located.

56. The apparatus of claim 55, wherein the scheduling information is downlink control information, DCI, and numbers of layers corresponding to different types of DCI are configured separately by the network device.

57. The apparatus of claim 53, wherein the information fields, in the scheduling information for the first channel, for indicating the first control information and a number of codewords corresponding to the scheduling information are in one-to-one correspondence.

58. The apparatus of any of claims 53 to 57, further comprising:
determining the scheduling information based on the number of pieces of the first control information and/or the number of information fields for indicating the first control information.

59. The apparatus of claim 58, wherein determining the scheduling information based on the number of pieces of the first control information and/or the number of information fields for indicating the first control information comprises:
determining an overhead of the scheduling information based on the number of pieces of the first control information and/or the number of information fields for indicating the first control information; and
based on the overhead, detecting the scheduling information and/or decoding the scheduling information.

60. The apparatus of claim 59, further comprising:
transmitting information on the first channel based on the first control information.

61. The apparatus of any of claims 53 to 60, wherein the first control information comprises one or more of the following:
modulation and coding scheme, MCS;
redundancy version, RV;
new data indicator, NDI;
pre-coding and/or number of layers indication information; or
sounding reference signal, SRS, resource indicator, SRI.

62. The apparatus of any of claims 53 to 61, wherein determining, based on the first number of layers, the number of pieces of the first control information contained in the scheduling information for the first channel and/or the number of information fields, in the scheduling information for the first channel, for indicating the first control information comprises:
determining, based on a value range of the first number of layers, the number of pieces of the first control information contained in the scheduling information for the first channel and/or the number of information fields, in the scheduling information for the first channel, for indicating the first control information.

63. The apparatus of claim 62, wherein determining, based on the value range of the first number of layers, the number of pieces of the first control information contained in the scheduling information for the first channel and/or the number of information fields, in the scheduling information for the first channel, for indicating the first control information comprises:
in case that a maximum value of the first number of layers is greater than 4, determining that the number of pieces of the first control information contained in the scheduling information is 2; and
in case that a maximum value of the first number of layers is smaller than or equal to 4, determining that a number of pieces of control information corresponding to a transport block contained in the scheduling information is 1.

64. The apparatus of any of claims 53 to 61, wherein determining, based on the number of codewords, the number of pieces of the first control information contained in the scheduling information for the first channel and/or the number of information fields, in the scheduling information for the first channel, for indicating the first control information comprises:
determining, based on a value range of the number of codewords, the number of pieces of the first control information contained in the scheduling information for the first channel and/or the number of information fields, in the scheduling information for the first channel, for indicating the first control information.

65. The apparatus of claim 64, wherein determining, based on the value range of the number of codewords, the number of pieces of the first control information contained in the scheduling information for the first channel and/or the number of information fields, in the scheduling information for the first channel, for indicating the first control information comprises:
in case that the number of codewords is 2, determining that the number of pieces of the first control information contained in the scheduling information is 2; and
in case that the number of codeword is 1, determining that the number of pieces of the first control information contained in the scheduling information is 1.

66. An apparatus for determining control information, comprising:
a determining unit for a number of layers or a number of codewords, used for determining a first number of layers corresponding to a first channel, or a number of codewords corresponding to scheduling information for a first channel, or a first parameter, wherein the first parameter is used to determine a number of codewords corresponding to scheduling information for a first channel;
a determining unit for a number of pieces of control information or a number of information fields, used for determining a number of pieces of first control information contained in the scheduling information for the first channel and/or a number of information fields, in the scheduling information for the first channel, for indicating first control information, wherein the number of pieces of the first control information and/or the number of the information fields has a correspondence relationship with the first number of layers or the number of codewords; and
a transmitting unit, used for transmitting the scheduling information to a user equipment, UE.

67. The apparatus of claim 66, wherein the first number of layers comprises one of the following:
a maximum number of layers determined based on restriction information for number of layers;
a number of layers configured by a network device; or
a maximum number of layers supported by the UE.

68. The apparatus of claim 67, wherein the number of layers configured by the network device comprises one of the following:
a maximum number of layers corresponding to a type of the scheduling information; or
a maximum number of layers corresponding to a serving cell where the first channel is located.

69. The apparatus of claim 68, wherein the scheduling information is downlink control information, DCI, and numbers of layers corresponding to different types of DCI are configured separately by the network device.

70. The apparatus of any of claims 66 to 69, wherein the information fields, in the scheduling information for the first channel, for indicating the first control information and a number of codewords corresponding to the scheduling information are in one-to-one correspondence.

71. The apparatus of any of claims 66 to 70, further comprising:
determining the scheduling information based on the number of pieces of the first control information and/or the number of information fields for indicating the first control information.

72. The apparatus of claim 68, wherein determining the scheduling information based on the number of pieces of the first control information and/or the number of information fields for indicating the first control information comprises:
determining an overhead of the scheduling information based on the number of pieces of the first control information and/or the number of information fields for indicating the first control information; and
based on the overhead, detecting the scheduling information and/or decoding the scheduling information.

73. The apparatus of claim 72, further comprising:
transmitting information on the first channel based on the first control information.

74. The apparatus of any of claims 66 to 73, wherein the first control information comprises one or more of the following:
modulation and coding scheme, MCS;
redundancy version, RV;
new data indicator, NDI;
pre-coding and/or number of layers indication information; or
sounding reference signal, SRS, resource indicator, SRI.

75. The apparatus of any of claims 66 to 74, wherein the number of pieces of the first control information and/or the number of the information fields has the correspondence relationship with the first number of layers comprises:
a value range of the first number of layers has a correspondence relationship with the number of pieces of the first control information contained in the scheduling information for the first channel and/or the number of the information fields, in the scheduling information for the first channel, for indicating the first control information.

76. The apparatus of claim 75, wherein the value range of the first number of layers has the correspondence relationship with the number of pieces of the first control information contained in the scheduling information for the first channel and/or the number of the information fields, in the scheduling information for the first channel, for indicating the first control information comprises:
in case that a maximum value of the first number of layers is greater than 4, the number of pieces of the first control information contained in the scheduling information is 2; and
in case that a maximum value of the first number of layers is smaller than or equal to 4, the number of pieces of the first control information contained in the scheduling information is 1.

77. The apparatus of any of claims 66 to 74, wherein the number of pieces of the first control information and/or the number of the information fields has the correspondence relationship with the number of codewords comprises:
a value range of the number of codewords has a correspondence relationship with the number of pieces of the first control information contained in the scheduling information for the first channel and/or the number of information fields, in the scheduling information for the first channel, for indicating the first control information.

78. The apparatus of claim 77, wherein the value range of the number of codewords has the correspondence relationship with the number of pieces of the first control information contained in the scheduling information for the first channel and/or the number of information fields, in the scheduling information for the first channel, for indicating the first control information comprises:
in case that the number of codewords is 2, the number of pieces of the first control information contained in the scheduling information is 2; and
in case that the number of codeword is 1, the number of pieces of the first control information contained in the scheduling information is 1.

79. A computer-readable storage medium storing a computer program for causing a computer to perform the method of any of claims 1 to 13, or to perform the method of any of claims 14 to 26.
